# EUROPEAN PATENT APPLICATION

(11) **EP 4 610 217 A1**
(43) Date of publication of application: **03.09.2025**
(21) Application number: 23882500.4
(22) Date of filing: 17.10.2023
(51) Int. Cl.: B66F 9/24, B66F 9/06, B66F 9/075, B66F 9/08, B66F 9/12, B66F 9/14, G05D 1/00, G05D 1/43, G08G 1/00, G08G 1/09

(54) **INFORMATION PROCESSING DEVICE, PROGRAM, AND FORKLIFT**

(30) Priority: 26.10.2022 JP 2022171807; 01.11.2022 JP 2022175752; 07.11.2022 JP 2022178314; 06.12.2022 JP 2022194990; 06.12.2022 JP 2022195223; 06.12.2022 JP 2022195224; 07.12.2022 JP 2022195939; 14.12.2022 JP 2022199788; 22.02.2023 JP 2023026751; 05.04.2023 JP 2023061761; 01.06.2023 JP 2023091230
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/037596
(87) International publication number: WO 2024/090295

(57) **Abstract**

An information processing apparatus includes a calculation unit that calculates a control variable for controlling an operation of a forklift based on detection information detected by a detection unit mounted on the forklift, and a control section that controls the operation of the forklift based on the control variable calculated by the calculation unit.

## Description

### Technical Field

The present disclosure relates to an information processing apparatus, a program, and a forklift.

### Background Art

Japanese Patent Application Laid-Open (JP-A) No. 2022-035198 discloses a vehicle having an automatic driving function.

Japanese Patent Application Laid-Open (JP-A) No. 2021-062964 discloses a forklift that autonomously travels.

### SUMMARY OF INVENTION

### Solution to Problem

According to an embodiment of the disclosure, an information processing apparatus is provided. An information processing apparatus of a first aspect includes a calculation unit that calculates a control variable for controlling an operation of a forklift based on detection information detected by a detection unit mounted on the forklift, and a control section that controls the operation of the forklift based on the control variable calculated by the calculation unit.

In an information processing apparatus of a second aspect, in the information processing apparatus of the first aspect, the control section controls the operation of the forklift in units of one-billionth of a second based on the control variable calculated by the calculation unit.

An information processing apparatus of a third aspect in the information processing apparatus of the first or second aspect further includes a determination unit that determines control information to be used for calculation of the control variable for each operation of the forklift from the acquirable detection information, in which the calculation unit calculates the control variable for the control section to control the operation of the forklift based on the control information determined by the determination unit.

In an information processing apparatus of a fourth aspect, in the information processing apparatus of any one of the first to third aspects, the calculation unit calculates the control variable for controlling extension and retraction of a fork that is provided in the forklift and is extendable and retractable in a front-rear direction, as the operation of the forklift based on the detection information, and the control section controls extension and retraction of the fork based on the control variable calculated by the calculation unit.

In an information processing apparatus of a fifth aspect, in the information processing apparatus of the fourth aspect, in the fork configured by overlapping a plurality of forks, the detection unit is mounted on each of the plurality of forks, and the calculation unit calculates the control variable based on the detection information in which a plurality of the detection units have detected a common range.

In an information processing apparatus of a sixth aspect, in the information processing apparatus of the fourth or fifth aspect, in the fork configured by overlapping a plurality of forks, the detection unit is mounted on each of the plurality of forks, and the calculation unit calculates the control variable based on the detection information in which a plurality of the detection units have detected different ranges.

In an information processing apparatus of a seventh aspect, in the information processing apparatus of any one of the fourth to sixth aspects, the calculation unit calculates the control variable for controlling extension and retraction of a first fork as the fork or a second fork different from the first fork in the forklift based on the detection information, and the control section controls extension and retraction of the first fork or the second fork based on the control variable calculated by the calculation unit.

In an information processing apparatus of an eighth aspect, in the information processing apparatus of any one of the first to seventh aspects, the calculation unit calculates the control variable for controlling extension and retraction of a guide that is provided in the forklift and is extendable and retractable in an up-down direction, as the operation of the forklift based on the detection information, and the control section controls extension and retraction of the guide based on the control variable calculated by the calculation unit.

In an information processing apparatus of a ninth aspect, in the information processing apparatus of any one of the first to eighth aspects, the calculation unit calculates, as the operation of the forklift, the control variable for controlling a protrusion amount of a protective member that is able to protrude upward and surround a cargo based on the detection information, and the control section controls the protrusion amount of the protective member based on the control variable calculated by the calculation unit.

In an information processing apparatus of a tenth aspect, in the information processing apparatus of any one of the first to ninth aspects, the control section controls, as the operation of the forklift, extension and retraction of at least one of a fork that is provided in the forklift and is extendable and retractable in a front-rear direction or a guide that is provided in the forklift and is extendable and retractable in an up-down direction, during movement of the forklift based on the control variable calculated by the calculation unit.

In an information processing apparatus of an eleventh aspect, in the information processing apparatus of the tenth aspect, the control section controls extension and retraction of at least one of the fork or the guide such that the fork or the guide does not come into contact with another object during the movement of the forklift.

In an information processing apparatus of a twelfth aspect, in the information processing apparatus of any one of the first to eleventh aspects, the calculation unit calculates the control variable for controlling the operation of the forklift, the control variable including at least one of an extension/retraction distance in a horizontal direction or a movement distance in an up-down direction of the fork, based on detection information that is detected by the detection unit and includes a weight of a cargo placed on a fork of the forklift, and the control section controls the operation of the forklift including at least one of the extension/retraction distance in the horizontal direction or the movement distance in the up-down direction of the fork, based on the control variable calculated by the calculation unit.

In an information processing apparatus of a thirteenth aspect, in the information processing apparatus of any one of the first to twelfth aspects, the calculation unit calculates the control variable for controlling the operation of the forklift including deformation of a plurality of forks, based on the detection information detected by the detection unit mounted on the forklift including the plurality of forks each of which deforms stepwise, and the control section controls the operation of the forklift including deformation of the plurality of forks based on the control variable calculated by the calculation unit.

In an information processing apparatus of a fourteenth aspect, in the information processing apparatus of the thirteenth aspect, the detection information includes peripheral information indicating a peripheral situation of the forklift, the calculation unit calculates the control variable for controlling the deformation of the plurality of forks based on the peripheral information, and the control section controls the operation of the forklift based on the control variable for controlling the deformation of the plurality of forks.

In an information processing apparatus of a fifteenth aspect, in the information processing apparatus according to any one of the first to fourteenth aspects, a center of gravity of the control section is located on a side opposite to a direction in which a fork of the forklift extends.

In an information processing apparatus of a sixteenth aspect, in the information processing apparatus of the fifteenth aspect, the control section includes a housing provided with the fork, and a control device provided in the housing.

In an information processing apparatus of a seventeenth aspect, in the information processing apparatus of the sixteenth aspect, the housing is flat in an up-down direction.

In an information processing apparatus of an eighteenth aspect, in the information processing apparatus of the seventeenth aspect, the control device is attachable to and detachable from the housing.

In an information processing apparatus of a nineteenth aspect, in the information processing apparatus of the eighteenth aspect, the control device has a non-line-symmetric shape in plan view.

In an information processing apparatus of a twentieth aspect, in the information processing apparatus of the eighteenth or nineteenth aspect, a center of gravity of the control device is located on a side opposite to the direction in which the fork extends in a state where the control device is attached to the housing.

In an information processing apparatus of a 21st aspect, in the information processing apparatus of any one of the eighteenth to twentieth aspects, a center of gravity of the housing is located on a side opposite to the direction in which the fork extends.

In an information processing apparatus of a 22nd aspect, in the information processing apparatus according to any one of the first to 21st aspects, the control section controls a height of a guard provided on at least one of four sides of a platform on which a cargo is placed in the forklift.

In an information processing apparatus of a 23rd aspect, in the information processing apparatus of the 22nd aspect, the control section raises the guard in accordance with an increase in acceleration during traveling of the forklift.

In an information processing apparatus of a 24th aspect, in the information processing apparatus of the 23rd aspect, the control section lowers the guard in accordance with a decrease in the acceleration during the traveling of the forklift.

In the information processing apparatus of a 25th aspect, in the information processing apparatus of the 23rd or 24th aspect, the control section raises the guard in a direction opposite to the acceleration of the forklift.

In an information processing apparatus of a 26th aspect, in the information processing apparatus of any one of the first to 25th aspects, the calculation unit calculates the control variable for controlling the operation of the forklift including rotation of a fork that is rotatable in a right-left direction with respect to the guide that extends in an up-down direction, based on the detection information detected by the detection unit mounted on the forklift including the guide and the fork, and the control section controls the operation of the forklift including the rotation of the fork based on the control variable calculated by the calculation unit.

In an information processing apparatus of a 27th aspect, in the information processing apparatus of the 26th aspect, the control section controls an up-down movement and a right-left rotation of the fork that moves along a predetermined circulation track along the guide, the predetermined circulation track including a vertical track extending in an up-down direction, for each of one or a plurality of the forks.

In an information processing apparatus of a 28th aspect, in the information processing apparatus of the 27th aspect, the control section moves a pair of the forks on which a load is placed, along the vertical track, and performs control to move another pair of the forks on which the load is not placed, along another vertical track different from the vertical track in the circulation track in a state where the other pair of the forks is rotated to a predetermined angle in the right-left direction.

In an information processing apparatus of a 29th aspect, in the information processing apparatus of the 28th aspect, in a case where the pair of forks moved along one direction of the vertical track reaches an end portion of the vertical track, the control section performs control to rotate the forks to a predetermined angle in the right-left direction and to move the other vertical track along an opposite direction opposite to the one direction.

In an information processing apparatus of a 30th aspect, in the information processing apparatus of any one of the 26th to 29th aspects, a drive mechanism of the fork is a linear motor.

According to an embodiment of the disclosure, there is provided a program for causing a computer of a 31st aspect to function as the information processing apparatus of any one of the first to 30th aspects.

According to an embodiment of the disclosure, a forklift including a guide extending in an up-down direction is provided. A forklift of a 32nd aspect includes a guide that extends in an up-down direction, a plurality of forks that are movable in the up-down direction for each area of a height of the guide and are capable of extending and retracting a part on which a cargo is placed, in a front-rear direction with respect to the guide, a detection unit mounted on the forklift, and a control section that controls vertical movement and extension/retraction of the plurality of forks based on the information detected by the detection unit.

In a forklift of a 33rd aspect, in the forklift of the 32nd aspect, one or a plurality of the forks are provided on each of a front surface and a rear surface of the guide.

In a forklift of a 34th aspect, in the forklift of the 32nd or 33rd aspect, the detection unit detects information regarding a weight of each of the cargos placed on each of the forks, and the control section controls the plurality of forks based on at least one of a placement order or an unloading order of the cargos with respect to the plurality of forks determined in accordance with the weight of each of the cargos.

In a forklift of a 35th aspect, in the forklift of the 32nd or 33rd aspect, the control section performs autonomous traveling based on information detected by the detection unit.

In a forklift of a 36th aspect, in the forklift of the 35th aspect, the control section controls each of the forks based on a gravity center position of the forklift.

The above summary of the disclosure does not enumerate all the necessary features of the disclosure. Further, a subcombination of these feature groups can also be included in the disclosure.

### BRIEF DESCRIPTION OF DRAWINGS

Fig. 1A is an explanatory diagram illustrating an example of information accumulated in a cloud according to a first embodiment.
Fig. 1B is a schematic diagram of a network configuration according to the first embodiment.
Fig. 2A is a first perspective view illustrating a forklift according to the first embodiment.
Fig. 2B is a plan view of a tire of the forklift according to the first embodiment.
Fig. 2C is a side view of the tire of the forklift according to the first embodiment.
Fig. 3 is a flowchart executed by a Central Brain according to the first embodiment.
Fig. 4 is a second perspective view illustrating the forklift according to the first embodiment.
Fig. 5 is a third perspective view illustrating the forklift according to the first embodiment.
Fig. 6 is a fourth perspective view illustrating the forklift according to the first embodiment.
Fig. 7 is a diagram schematically illustrating an example of a hardware configuration of a computer that functions as the Central Brain.
Fig. 8A is a first side view illustrating a fork according to a second embodiment.
Fig. 8B is a second side view illustrating the fork according to the second embodiment.
Fig. 9 is a block diagram illustrating an example of a functional configuration of a computer that functions as a Central Brain according to a third embodiment.
Fig. 10 is a flowchart executed by a Central Brain according to a fourth embodiment.
Fig. 11 is a side view illustrating an extending state of a fork according to a fifth embodiment.
Fig. 12 is a perspective view illustrating a forklift according to a seventh embodiment.
Fig. 13 is a perspective view illustrating a forklift according to a ninth embodiment.
Fig. 14 is a flowchart executed by a Central Brain according to the ninth embodiment.
Fig. 15 is a block diagram illustrating an example of a functional configuration of a computer that functions as a Central Brain according to a tenth embodiment.
Fig. 16 is a flowchart executed by a Central Brain according to the tenth embodiment.
Fig. 17 is a first side view illustrating a forklift according to an eleventh embodiment.
Fig. 18 is a second side view illustrating the forklift according to the eleventh embodiment.
Fig. 19 is a side view illustrating an entire fork according to a twelfth embodiment.
Fig. 20 is a first side view illustrating a form in which forks of a forklift according to the twelfth embodiment extend stepwise.
Fig. 21 is a second side view illustrating a form in which the forks of the forklift according to the twelfth embodiment extend stepwise.
Fig. 22 is a perspective view illustrating a forklift according to a thirteenth embodiment.
Fig. 23 is a first plan view illustrating the forklift according to the thirteenth embodiment.
Fig. 24 is a side view illustrating the forklift according to the thirteenth embodiment.
Fig. 25 is a second plan view illustrating the forklift according to the thirteenth embodiment.
Fig. 26 is a schematic diagram of a network configuration according to a fourteenth embodiment.
Fig. 27 is a perspective view illustrating a raised state of the forklift and a guard of the forklift according to the fourteenth embodiment.
Fig. 28 is a functional block diagram of a pallet of the forklift according to the fourteenth embodiment.
Fig. 29 is a perspective view illustrating an open state of the forklift and the guard of the forklift according to the fourteenth embodiment.
Fig. 30 is a perspective view illustrating a forklift according to a fifteenth embodiment.
Fig. 31 is a perspective view illustrating a forklift according to a sixteenth embodiment.
Fig. 32 is a first perspective view illustrating an example of control of a forklift according to a seventeenth embodiment.
Fig. 33 is a second perspective view illustrating an example of the control of the forklift according to the seventeenth embodiment.
Fig. 34 is a perspective view schematically illustrating a structure of a fork and a guide of the forklift according to the seventeenth embodiment.
Fig. 35 is a view schematically illustrating a movable range in which the fork according to the seventeenth embodiment rotates in a right-left direction.
Fig. 36 is a view schematically illustrating a drive mechanism of the fork according to the seventeenth embodiment.
Fig. 37 is a first view schematically illustrating a case where a pallet is placed on a fork according to a modification example of the seventeenth embodiment.
Fig. 38 is a second view schematically illustrating a case where a pallet is placed on a fork according to a modification example of the seventeenth embodiment.
Fig. 39 is a third view schematically illustrating a case where a pallet is placed on a fork according to a modification example of the seventeenth embodiment.

### DESCRIPTION OF EMBODIMENTS

Hereinafter, embodiments of the present disclosure will be described, but the following embodiments do not limit the disclosure. In addition, not all combinations of features described in the embodiments are essential to the solution of the disclosure.

### (First Embodiment)

First, a first embodiment according to the present embodiment will be described.

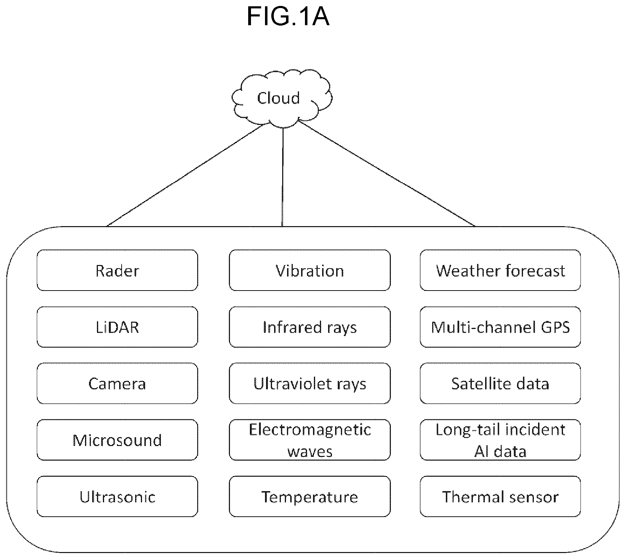

Fig. 1A is an explanatory diagram illustrating an example of information accumulated in a cloud 5 according to the first embodiment. In the first embodiment, a plurality of types of detection information (which will be described later) is converted into AI data and accumulated in the cloud 5. An AI predicts and determines the best mixture of situations every nanosecond (one-billionth of a second) and optimizes an operation of a forklift 10.

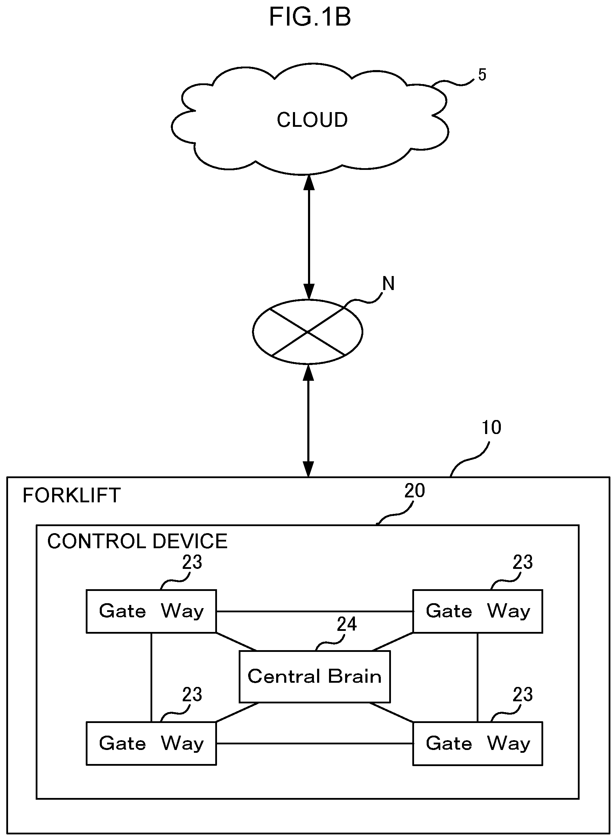

Fig. 1B is a schematic diagram of a network configuration according to the first embodiment. The forklift 10 in the first embodiment is connected to the cloud 5 through a network N. As the network N, a public line according to a 6G or higher communication standard is exemplified.

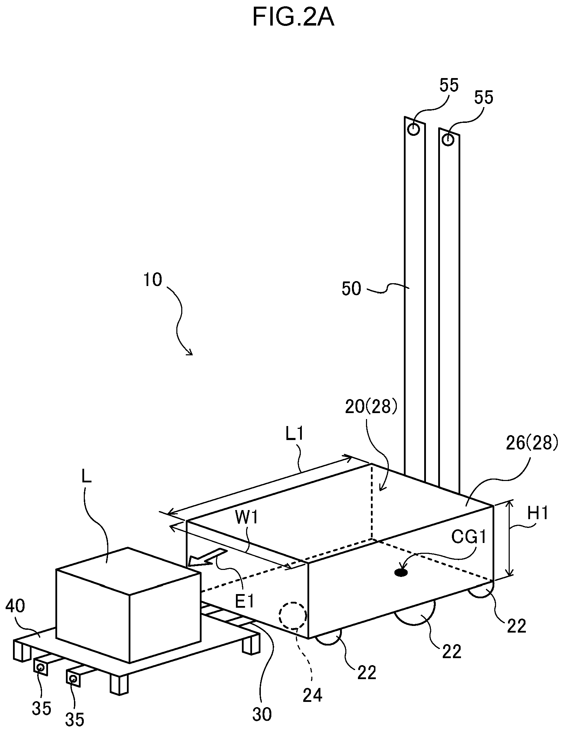

Fig. 2A is a first perspective view illustrating the forklift 10 according to the first embodiment.

As illustrated in Fig. 2A, the forklift 10 includes a control device 20, a fork 30, a pallet 40, and a guide 50.

The control device 20 controls the operation of the forklift 10. The "operation of the forklift 10" is a concept including an operation of each member provided in the forklift 10 and an operation of the forklift 10 itself, specifically, an automatic driving operation of the forklift 10.

The forklift 10 includes a housing 26. In the first embodiment, the housing 26 has a rectangular parallelepiped shape as an example. The control device 20 is provided in the housing 26. A control section 28 includes the control device 20 and the housing 26. A plurality of tires 22 are provided in a lower portion of the housing 26. A Central Brain 24 is further provided in the control device 20. The Central Brain 24 is an example of an information processing apparatus.

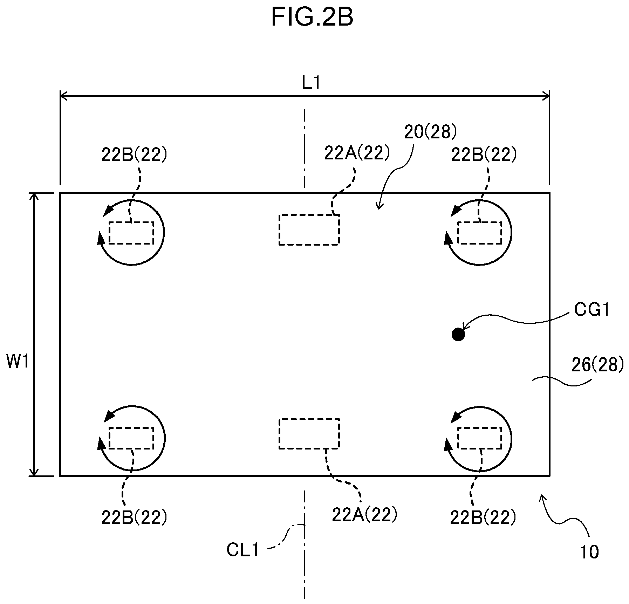

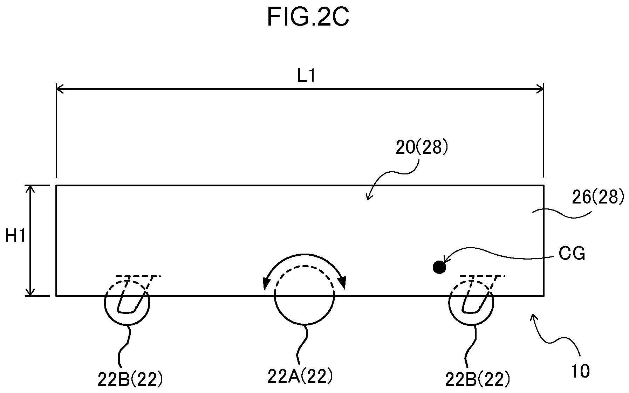

Figs. 2B and 2C are views illustrating the tire 22 of the forklift 10 according to the first embodiment. The tire 22 in the first embodiment includes a pair of drive wheels 22A provided on the left and right at the center in the front-rear direction of the forklift 10 and driven wheels 22B provided at four corners. The drive wheel 22A cannot turn and can be driven by motors (not illustrated) independently mounted on the left and right. The driven wheel 22B is a so-called caster capable of turning. The forklift 10 moves forward or backward by rotating the left and right drive wheels 22A in the same direction. In this case, the forklift 10 can bend leftward or rightward by changing a rotation speed of the left and right drive wheels 22A rotated in the same direction. The forklift 10 turns on the spot by rotating the left and right drive wheels 22A in the opposite direction. Each tire 22 may be provided with a suspension for buffering an impact from a traveling path. As described above, the forklift 10 in the first embodiment can freely travel on the traveling path by independently rotating the left and right drive wheels 22A under the control of the Central Brain 24.

As illustrated in Fig. 1B, a plurality of Gate Ways 23 are communicably connected to the Central Brain 24. The Central Brain 24 is connected to the external cloud 5 via the Gate Way 23. The Central Brain 24 is configured to be able to access the external cloud 5 via the Gate Way 23. On the other hand, due to the presence of the Gate Way 23, the Central Brain 24 is configured such that the Central Brain 24 cannot be directly accessed from the outside.

The Central Brain 24 outputs a request signal to a server every time a predetermined time elapses. Specifically, the Central Brain 24 outputs a request signal representing an inquiry to the cloud 5 as a server every one-billionth of a second.

As illustrated in Fig. 2A, the fork 30 is provided to be extendable in a direction of an arrow E1 with respect to the housing 26. A sensor 35 is provided at a distal end portion of the fork 30.

A cargo L is placed on a placement surface of the pallet 40.

The guide 50 extends upward from one end portion of the control device 20 in the front-rear direction. A sensor 55 is provided at an upper end portion of the guide 50.

Here, examples of the sensor 35 and the sensor 55 are radar, LiDAR, high-pixel/telephoto/ultra-wide angle/360 degrees/high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, long tail incident AI data, and the like. The long tail incident AI data is data corresponding to Trip data of a vehicle mounted at the level 5.

Examples of detection information taken in from the sensors 35 and 55 and other sensors include position information, the center of gravity, and a direction of the forklift 10, a direction, a material, a wear state, and an air pressure of the tire 22, a road surface state (friction coefficient, inclination in vertical and lateral oblique directions, material, road width, and the like), and peripheral information indicating a peripheral situation of the forklift 10. Here, examples of the peripheral information include a case where there is another cargo in front of the pallet 40 conveyed by the forklift 10, and a case where the pallet 40 is placed in the middle of the stairs.

In addition, examples of the detection information include the type, the load, the center of gravity, a transport source, a transport destination, and a travel route of the cargo L, the outside air temperature, the outside air humidity, and the surrounding situation (birds, animals, soccer balls, accident vehicles, earthquakes, fires, winds, typhoons, heavy rain, light rain, snowstorm, fog, and the like). In the first embodiment, the detection of the detection information is performed every one-billionth of a second.

In the first embodiment, the Central Brain 24 functions as a calculation unit that calculates a control variable for controlling the operation of the forklift 10 based on detection information detected by the sensors 35 and 55 and other sensors. The sensors 35 and 55 and the other sensors are examples of a "detection unit". In the first embodiment, the control variable is calculated every one-billionth of a second.

In the first embodiment, the Central Brain 24 functions as a part of the control section 28 that controls the operation of the forklift 10 in units of one-billionth of a second based on the control variable calculated above.

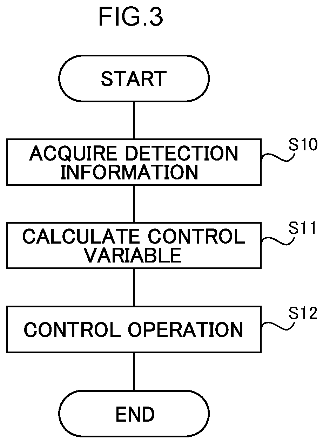

The Central Brain 24 repeatedly executes the flowchart illustrated in Fig. 3.

In step S10, the Central Brain 24 acquires detection information detected by the sensors 35 and 55, and other sensors. The Central Brain 24 proceeds to step S11.

In step S11, the Central Brain 24 calculates a control variable based on the detection information acquired in step S10. The Central Brain 24 proceeds to step S12.

In step S12, the Central Brain 24 controls the operation of the forklift 10 based on the control variable calculated in step S11. The Central Brain 24 ends the processing of the flowchart.

For example, the Central Brain 24 controls the automatic driving operation of the forklift 10 as the operation of the forklift 10 and causes the forklift 10 to travel in a factory at a maximum speed of 20 km/h. Here, since the maximum speed of the conventional forklift is about 5 km/h, the Central Brain 24 can contribute to significant improvement in production capacity, factory efficiency, and the like.

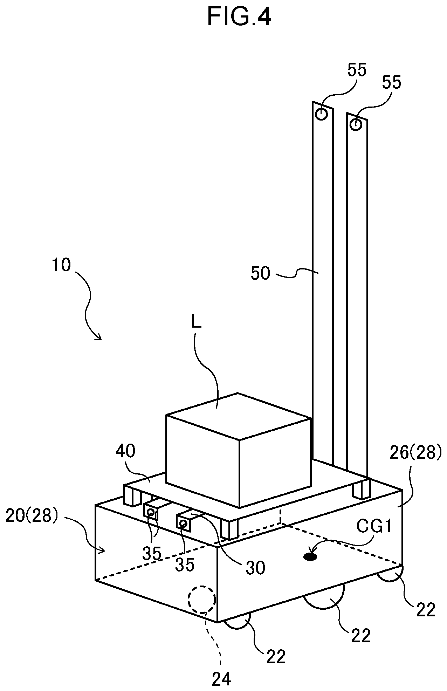

Figs. 4 to 6 are explanatory diagrams illustrating an example of control of the operation of the forklift 10 by the Central Brain 24. The states of the forklift 10 illustrated in Figs. 2A and 4 to 6 are realized in a manner that the Central Brain 24 controls the operation of the forklift 10 in units of one-billionth of a second based on the control variable calculated based on detection information detected by the sensors 35 and 55, and the other sensors.

Fig. 4 is a second perspective view illustrating the forklift 10 according to the first embodiment.

As illustrated in Figs. 2A and 4, the forks 30 of the forklift 10 can move up and down while extending from the control device 20 by a predetermined amount. As a result, when the cargo L is picked up from the forklift 10, the position of the fork 30 can be finely adjusted up and down. As illustrated in Fig. 4, the fork 30 can be completely stored on the upper surface of the control device 20.

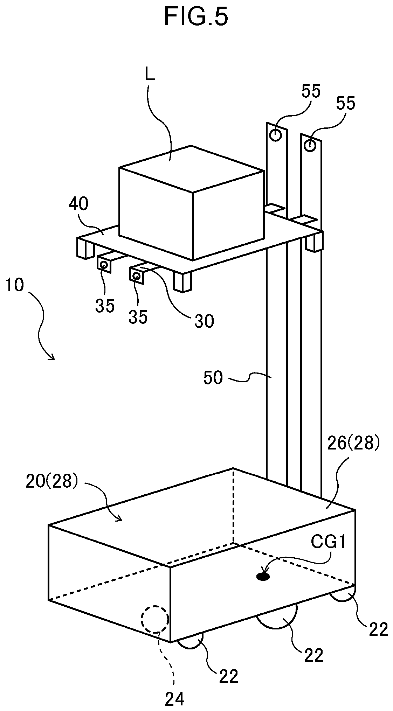

Fig. 5 is a third perspective view illustrating the forklift 10 according to the first embodiment.

As illustrated in Fig. 5, in the forklift 10, the fork 30 and the pallet 40 can be moved up and down along the guide 50. As a result, the cargo L can be moved to a position higher than the control device 20.

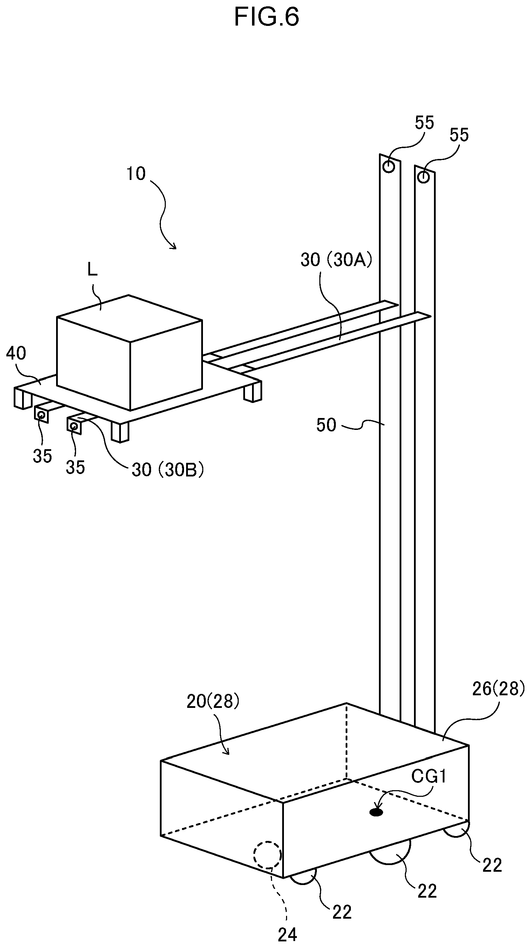

Fig. 6 is a fourth perspective view illustrating the forklift 10 according to the first embodiment.

As illustrated in Fig. 6, the fork 30 is extendable and retractable in the front-rear direction. In the drawing, the fork 30 includes a first fork 30A supported by the guide 50, and a second fork 30B that is provided separately at the upper portion of the first fork 30A and slidable on the first fork 30A. Extension and retraction of the fork 30 are performed in a manner that the Central Brain 24 controls driving of a drive mechanism (not illustrated). As a result, the second fork 30B slides forward on the first fork 30A, so that the entire length of the fork 30 can be extended as compared with a state where the second fork 30B is on the first fork 30A, and the cargo L can be moved to a position far from the control device 20. When the second fork 30B slides forward on the first fork 30A while the fork 30 is moving to the lowermost end of the forklift 10, the distal end portion of the second fork 30B extending downward comes into contact with the road surface, so that an occurrence of deflection when the fork 30 is extended to the maximum can be suppressed. A sensor similar to the sensor 35 provided in the second fork 30B may also be provided in the first fork 30A. Similarly to the distal end portion of the second fork 30B, the first fork 30A may also be provided with a portion extending downward, and a sensor similar to the sensor 35 may be provided in the portion. As a result, the deflection of the first fork 30A can also be suppressed.

Furthermore, as illustrated in Fig. 6, the guide 50 is extendable and retractable in the up-down direction. Extension and retraction of the guide 50 are performed in a manner that the Central Brain 24 controls driving of a drive mechanism (not illustrated). As a result, for example, by moving the fork 30 to the upper portion of the guide 50 and then extending the fork 30, the cargo L can be moved to a position higher than the control device 20 and a position farther from the control device 20. In addition, when the cargo L is not placed on the pallet 40, the forklift 10 can be moved at a high speed by retracting the guide 50.

As illustrated in Figs. 2A and 4 to 6, the sensor 35 is provided at the distal end portion of the fork 30. As a result, the cargo L can be reliably caught at a high speed. Since it is possible to accurately detect the delivery destination of the cargo L even at a high position as illustrated in Fig. 6, it is possible to more reliably deliver the cargo L. As illustrated in Fig. 6, these effects are similarly obtained even when the fork 30 is extended.

As illustrated in Figs. 2A and 4 to 6, the sensor 55 is provided at the upper end portion of the guide 50. As a result, by detecting the height of a shelf at a high position when the fork 30 ascends along the guide 50, the fork 30 can be smoothly reached to the height of the shelf without an error. In addition, even during the movement of the forklift 10, the sensor 55 constantly performs detection from a high position, so that it is possible to safely travel to a destination and to stop at the destination without an error.

Furthermore, as illustrated in Figs. 2A and 4 to 6, a portion provided with the sensor 35 at the distal end portion of the fork 30 extends below the fork 30. As a result, the portion has a function of a sensor and serves as a counterbalance. That is, when the fork 30 moves to the lowermost end of the forklift 10, the portion comes into contact with the road surface, so that the fork can hold on when picking up the cargo L.

The states of the forklift 10 illustrated in Figs. 2A and 4 to 6 are examples of a result of the control of the operation of the forklift 10 by the Central Brain 24, and a state of the forklift 10 different from the state illustrated in each drawing may occur.

As illustrated in Figs. 2A to 2C, the control section 28 includes the control device 20 and the housing 26. The housing 26 has a rectangular parallelepiped shape having a length L1, a width W1, and a height H1. The center of gravity CG1 of the control section 28 is located on the rear side of a center line CL1 in a length direction, that is, on a side opposite to a direction in which the fork 30 extends (direction of the arrow E1). In the first embodiment, the center line CL1 is a center line of the control section 28 in plan view of the forklift 10 and is also a center line of the housing 26.

The housing 26 is flat in a height direction, that is, the up-down direction. The term "flat" means that the height H1 is smaller than the maximum value max(L1, W1) of the length L1 and the width W1, that is, H1 < max(L1, W1). Preferably, H1 < 0.5×max(L1, W1), and more preferably, H1 < 0.25×max(L1, W1). In the examples illustrated in Figs. 2A and 2B, the length L1 is longer than the width W1, but the length L1 and the width W1 may be the same, or the width W1 may be longer than the length L1.

In the first embodiment, the center of gravity of the control section 28 is located on the rear side of the center line CL1 in the length direction (arrow L direction), that is, on the side opposite to the direction in which the fork 30 extends (arrow E1 direction). Thus, for example, even in a state where the fork 30 is in an extending state and the cargo L is placed on the fork 30, it is possible to suppress the forklift 10 from falling down toward an extension direction side of the fork 30. In particular, as illustrated in Fig. 6, in a state where the fork 30 is moved to the upper portion of the guide 50 and the fork 30 is further extended, it is possible to suppress the forklift 10 from falling down toward the extension direction side of the fork 30.

In the first embodiment, the housing 26 is flat in the up-down direction. Therefore, the center of gravity CG1 is on the lower side as compared with the configuration in which the housing 26 is not flat in the up-down direction. Therefore, the posture of the forklift 10 is stabilized as compared with the configuration in which the center of gravity CG1 is on the upper side. For example, even when the forklift 10 travels in a state where the cargo L is placed on the fork 30, postures at the time of acceleration, deceleration, turning, and the like are stabilized.

The forklift 10 is not limited to the configuration described above, and may adopt the following configuration.

For example, the forklift 10 may include another fork different from the fork 30 on the back side of the guide 50 illustrated in Figs. 2A and 4 to 6. When the movement of the forklift 10 is a short distance, the forklift 10 may be moved in a state where the cargo L is placed on the other fork without placing the cargo L on the upper surface of the control device 20. As a result, according to the configuration, it is possible to smoothly handle the movement of the cargo L for a short distance.

In addition, the forklift 10 may be configured such that a protective member such as a fence can protrude upward from the periphery of the control device 20 illustrated in Figs. 2A and 4 to 6. Since the protective member can surround the periphery of the cargo L including the pallet 40 by protruding upward, the cargo L is prevented from jumping out when the forklift 10 moves at a high speed.

Furthermore, in the forklift 10, the control device 20, the fork 30, the pallet 40, and the guide 50 may be configured separately. As a result, the control device 20 can control the operation of the forklift 10 by uniting the control device 20 with a device having a forklift function, and the control device 20 can control the operation of a drone by uniting the control device 20 with a device having a drone function. Thus, it is possible to provide versatility.

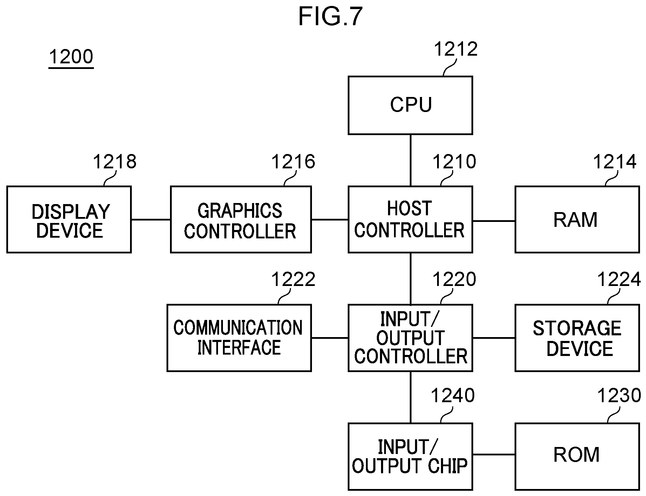

Fig. 7 schematically illustrates an example of a hardware configuration of a computer 1200 that functions as the Central Brain 24. A program installed in the computer 1200 can cause the computer 1200 to function as one or more "units" of the apparatus according to the first embodiment, or cause the computer 1200 to execute operations associated with the apparatus according to the first embodiment or one or more "units" of the apparatus, and/or cause the computer 1200 to execute a process according to the first embodiment or a stage of the process. Such a program may be executed by a CPU 1212, thereby causing the computer 1200 to execute a specific operation associated with some or all of the blocks in the flowcharts and block diagrams described herein.

The computer 1200 according to the first embodiment includes the CPU 1212, a RAM 1214, and a graphics controller 1216, which are interconnected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. Information processing described in these programs is read by the computer 1200 and provides cooperation between the programs and the various types of hardware resources. The apparatus or method may be configured by implementing operations or processing of information according to use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on a recording medium.

In addition, the CPU 1212 may cause the RAM 1214 to read all or a necessary part of a file or database stored in an external recording medium such as the storage device 1224, a DVD drive (DVD-ROM), an IC card, or the like, and may execute various types of processing on data on the RAM 1214. Then, the CPU 1212 may write back the processed data to an external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and designated by a command sequence of a program, and writes back the results to the RAM 1214. The CPU 1212 may retrieve information in a file, a database, or the like in the recording medium. For example, when a plurality of entries each having the attribute value of a first attribute associated with an attribute value of a second attribute are stored in a recording medium, the CPU 1212 may retrieve an entry in which the attribute value of the first attribute coincides with the designated condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. A recording medium such as a hard disk or a RAM provided in a server system connected to a dedicated communication network or the Internet can be used as a computer-readable storage medium, thereby providing a program to the computer 1200 via the network.

### (Second Embodiment)

Next, a second embodiment according to the present embodiment will be described while omitting or simplifying an overlapping portion with the above embodiment.

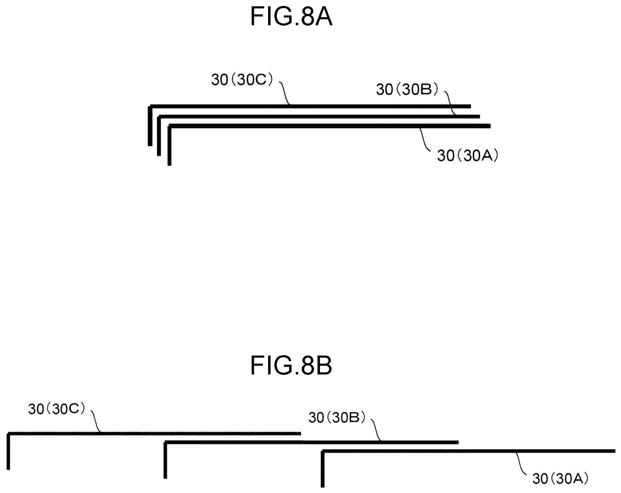

In the second embodiment, the fork 30 further includes a third fork 30C. Figs. 8A and 8B are side views illustrating the fork 30 according to the second embodiment. Specifically, Fig. 8A is a side view illustrating a stored state of the fork 30, and Fig. 8B is a side view illustrating an extending state of the fork 30.

As illustrated in Fig. 8A, in the stored state, the first fork 30A, the second fork 30B, and the third fork 30C overlap with each other. Here, the second fork 30B is provided separately at the upper portion of the first fork 30A and is slidable on the first fork 30A, and the third fork 30C is provided separately at an upper portion of the second fork 30B and is slidable on the second fork 30B.

As illustrated in Fig. 8B, in the extending state, the drive of the drive mechanism (not illustrated) is controlled by the Central Brain 24, and the second fork 30B and the third fork 30C slide forward from the stored state. As a result, in the extending state, the entire length of the fork 30 is extended as compared with the stored state.

As illustrated in Fig. 8B, the extending state is not limited to the state where the second fork 30B and the third fork 30C slide forward, and may be a state where only the third fork 30C slides forward. The amount of forward slide of each of the second fork 30B and the third fork 30C in the extending state is not limited to that illustrated in Fig. 8B, and may be larger or smaller.

As described above, the fork 30 can extend and retract in three stages of the stored state, the extending state where only the third fork 30C slides forward, and the extending state where the second fork 30B and the third fork 30C slide forward. As a result, for example, when the fork 30 is moved to the lowermost end or the uppermost end of the forklift 10, the stored state is changed to the extending state, whereby the cargo L placed on the far side can be easily conveyed. Although not illustrated, in a state where the second fork 30B and the third fork 30C slide forward, the fourth fork can extend thereon and move along the entire length of the fork 30.

### (Third Embodiment)

Next, a third embodiment according to the present embodiment will be described while omitting or simplifying an overlapping portion with the above embodiments.

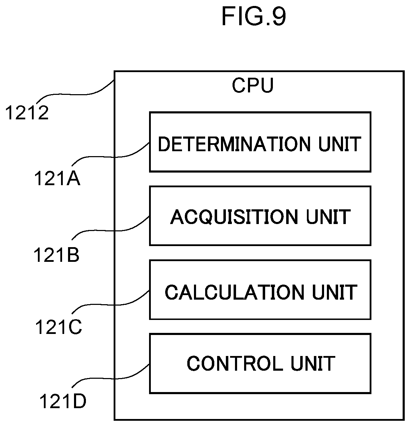

Fig. 9 is a first block diagram illustrating an example of a functional configuration of the computer 1200 that functions as the Central Brain 24.

As illustrated in Fig. 9, the CPU 1212 of the computer 1200 includes a determination unit 121A, an acquisition unit 121B, a calculation unit 121C, and a control section 121D as functional configurations. Each functional configuration is realized by the CPU 1212 reading and executing a program installed on the computer 1200.

The determination unit 121A determines control information to be used for calculation of a control variable for each operation of the forklift 10 from acquirable detection information. As an example, the determination unit 121A acquires detection information that can be detected by the sensors 35 and 55, and the other sensors during stop of the forklift 10, and determines control information used for calculation of each control variable from the detection information. Specifically, the determination unit 121A determines, from the acquirable detection information, control information used for calculation of a control variable for controlling extension and retraction of the fork 30, control information used for calculation of a control variable for controlling extension and retraction of the guide 50, and the like.

The acquisition unit 121B acquires detection information detected by the sensors 35 and 55, and the other sensors every one-billionth of a second during movement of the forklift 10.

The calculation unit 121C calculates a control variable for the control section 121D to control the operation of the forklift 10 every one-billionth of a second based on control information determined in advance by the determination unit 121A among pieces of the detection information acquired by the acquisition unit 121B during movement of the forklift 10.

The control section 121D controls the operation of the forklift 10 every one-billionth of a second based on the control variable calculated by the calculation unit 121C.

Next, a flow of processing executed by the computer 1200 functioning as the Central Brain 24 will be described. In the computer 1200, the CPU 1212 reads a program installed on the computer 1200, loads the program in the RAM 1214, and executes the program, thereby executing the processing of the flowchart illustrated in Fig. 3. As a premise of the processing, the CPU 1212 determines the control information used for calculation of the control variable for each operation of the forklift 10 from the acquirable detection information. Only step S11 in which the processing content is different from that of the first embodiment will be described below.

In step S11, the CPU 1212 calculates the control variable based on the control information determined in advance from the detection information acquired in step S10. The CPU 1212 proceeds to step S12.

As described above, in the computer 1200 functioning as the Central Brain 24 according to the third embodiment, the CPU 1212 determines the control information to be used for calculation of the control variable for each operation of the forklift 10 from the acquirable detection information. The CPU 1212 calculates the control variable for controlling the operation of the forklift 10 every one-billionth of a second based on the control information determined during stop of the forklift 10. As a result, in the computer 1200, the processing load of the CPU 1212 during the movement of the forklift 10 can be reduced as compared with the case of determining the information used for the calculation of the control variable for each operation of the forklift 10 during the movement of the forklift 10.

### (Fourth Embodiment)

Next, a fourth embodiment according to the present embodiment will be described while omitting or simplifying an overlapping portion with the above embodiments.

In the fourth embodiment, differing from the third embodiment, the CPU 1212 of the computer 1200 includes the acquisition unit 121B, the calculation unit 121C, and the control section 121D as functional configurations (see Fig. 9).

The calculation unit 121C calculates the control variable for controlling the extension and retraction of the fork 30 in the front-rear direction as the operation of the forklift 10 every one-billionth of a second based on the detection information acquired by the acquisition unit 121B. For example, the calculation unit 121C calculates the extension/retraction amount of the fork 30 according to the positional relationship between the forklift 10 and the delivery destination of the cargo L based on the detection information, and calculates the control variable for extending/retracting the fork 30 to the extension/retraction amount.

The control section 121D controls the extension and retraction of the fork 30 based on the control variable calculated by the calculation unit 121C.

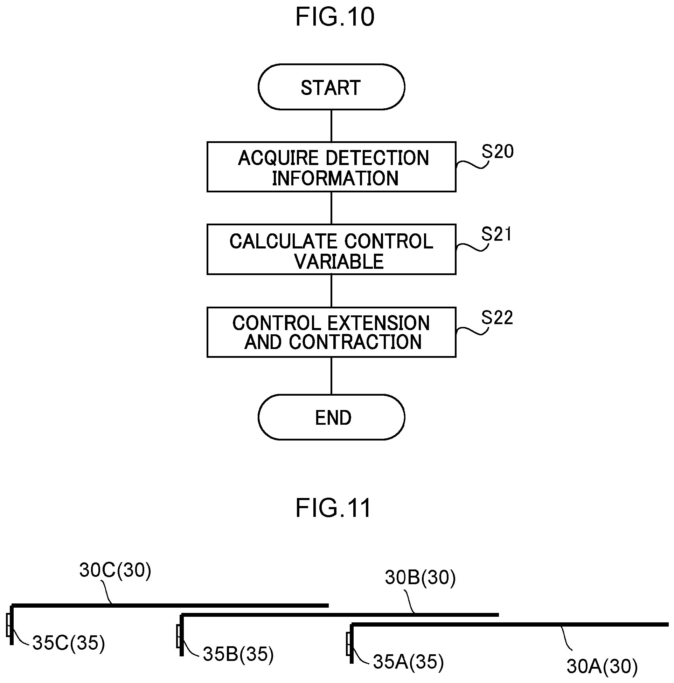

Next, a flow of processing executed by the computer 1200 functioning as the Central Brain 24 will be described. In the computer 1200, the CPU 1212 reads the program installed on the computer 1200, loads the program in the RAM 1214, and executes the program, thereby executing processing of the flowchart illustrated in Fig. 10.

In step S20, the CPU 1212 acquires detection information detected by the sensors 35 and 55, and other sensors. The CPU 1212 proceeds to step S21.

In step S21, the CPU 1212 calculates the control variable for controlling the extension and retraction of the fork 30 based on the detection information acquired in step S20. The CPU 1212 proceeds to step S22.

In step S22, the CPU 1212 controls the extension and retraction of the fork 30 based on the control variable calculated in step S21. The CPU 1212 ends the processing of the flowchart illustrated in Fig. 10.

As described above, in the computer 1200 functioning as the Central Brain 24 according to the fourth embodiment, the CPU 1212 calculates the control variable for controlling the extension and retraction of the fork 30 in the front-rear direction every one-billionth of a second based on the detection information. The CPU 1212 controls the extension and retraction of the fork 30 based on the calculated control variable. As a result, in the computer 1200, the cargo L can be precisely moved to a position far from the control device 20. In addition, in the computer 1200, when the cargo L is not placed on the pallet 40, the forklift 10 can be moved at a high speed by retracting the fork 30.

### (Fifth Embodiment)

Next, a fifth embodiment according to the present embodiment will be described while omitting or simplifying an overlapping portion with the above embodiments.

Fig. 11 is a side view illustrating the extending state of the fork 30 according to the fifth embodiment. As illustrated in Fig. 11, the fork 30 according to the fifth embodiment is configured by overlapping the first fork 30A, the second fork 30B, and the third fork 30C. A sensor 35A is provided at the distal end portion of the first fork 30A, a sensor 35B is provided at the distal end portion of the second fork 30B, and a sensor 35C is provided at the distal end portion of the third fork 30C. The sensor 35A, the sensor 35B, and the sensor 35C have detection functions similar to those of the sensor 35 in the above embodiments.

Here, in the fifth embodiment, the sensor 35A, the sensor 35B, and the sensor 35C have a common detection range. Therefore, in the fifth embodiment, detection information in which the sensor 35A, the sensor 35B, and the sensor 35C have detected a common range is input to the Central Brain 24.

With the above configuration, in the computer 1200 functioning as the Central Brain 24 according to the fifth embodiment, the CPU 1212 functions as the acquisition unit 121B that acquires the detection information in which the common range is detected by the sensor 35A, the sensor 35B, and the sensor 35C in addition to detection information detected by the sensor 55 and other sensors. In addition, the CPU 1212 functions as the calculation unit 121C that calculates a control variable for controlling the extension and retraction of the fork 30 in the front-rear direction every one-billionth of a second based on the acquired detection information. As a result, in the computer 1200, the reliability of the detection information from the sensor 35 used for calculation of the control variable can be enhanced as compared with a case where there is one sensor 35 provided in the fork 30.

### (Sixth Embodiment)

Next, a sixth embodiment according to the present embodiment will be described while omitting or simplifying an overlapping portion with the above embodiments.

In the sixth embodiment, similarly to the fifth embodiment, the fork 30 includes the first fork 30A, the second fork 30B, and the third fork 30C, and the first fork 30A, the second fork 30B, and the third fork 30C include the sensor 35A, the sensor 35B, and the sensor 35C, respectively.

Here, in the sixth embodiment, differing from the fifth embodiment, the sensor 35A, the sensor 35B, and the sensor 35C have different detection ranges. Therefore, in the sixth embodiment, detection information in which the sensor 35A, the sensor 35B, and the sensor 35C have detected different ranges is input to the Central Brain 24.

With the above configuration, in the computer 1200 functioning as the Central Brain 24 according to the sixth embodiment, the CPU 1212 functions as the acquisition unit 121B that acquires the detection information in which the different ranges are detected by the sensor 35A, the sensor 35B, and the sensor 35C in addition to detection information detected by the sensor 55 and other sensors. In addition, the CPU 1212 functions as the calculation unit 121C that calculates a control variable for controlling the extension and retraction of the fork 30 in the front-rear direction every one-billionth of a second based on the acquired detection information. As a result, in the computer 1200, since the detection range of the sensor 35 is wider than that in a case where there is one sensor 35 provided in the fork 30, the control variable can be calculated based on detection information in a wide range.

### (Seventh Embodiment)

Next, a seventh embodiment according to the present embodiment will be described while omitting or simplifying an overlapping portion with the above embodiments.

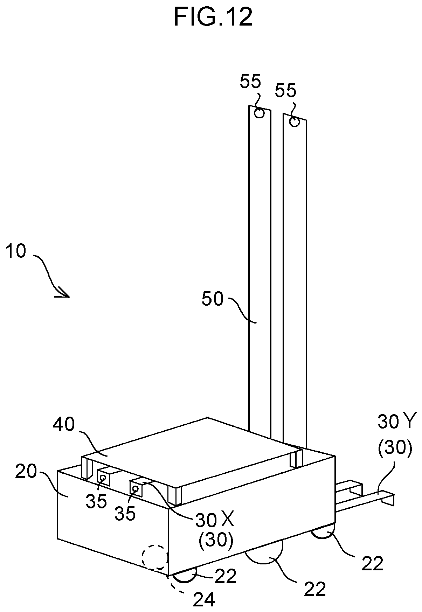

Fig. 12 is a perspective view illustrating the forklift 10 according to the seventh embodiment. As illustrated in Fig. 12, the fork 30 according to the seventh embodiment includes a front fork 30X stored in the upper surface of the control device 20, and a rear fork 30Y that is provided on the back side of the guide 50 and is different from the front fork 30X. The front fork 30X and the rear fork 30Y are extendable and retractable in the front-rear direction. The extension and retraction of the front fork 30X and the rear fork 30Y are performed in a manner that the Central Brain 24 controls the drive of the drive mechanism (not illustrated). The front fork 30X is an example of a "first fork", and the rear fork 30Y is an example of a "second fork".

Here, in the computer 1200 functioning as the Central Brain 24 according to the seventh embodiment, the CPU 1212 functions as the calculation unit 121C that calculates a control variable for controlling the extension and retraction of the front fork 30X or the rear fork 30Y every one-billionth of a second based on the acquired detection information. For example, when recognizing that the cargo L is on the back side of the guide 50 based on the acquired detection information, the CPU 1212 calculates a control variable for controlling the extension and retraction of the rear fork 30Y. The CPU 1212 functions as the control section 121D that controls the extension and retraction of the front fork 30X or the rear fork 30Y based on the calculated control variable. In the above case, the CPU 1212 causes the rear fork 30Y to extend and retract to the amount of extension and retraction by the control variable and places the cargo L on the rear fork 30Y. As a result, in the computer 1200, differing from the case where the fork 30 is provided only on one of the front side and the rear side of the control device 20, it is not necessary to turn the forklift 10 when placing the cargo L on the side where the fork 30 is not provided on the fork 30. Thus, the computer 1200 can contribute to a significant improvement in production capacity, factory efficiency, and the like as compared with a case where the fork 30 is provided only on one of the front side and the rear side of the control device 20.

### (Eighth Embodiment)

Next, an eighth embodiment according to the present embodiment will be described while omitting or simplifying an overlapping portion with the above embodiments.

In the eighth embodiment, differing from the fourth embodiment, the CPU 1212 of the computer 1200 includes the acquisition unit 121B, the calculation unit 121C, and the control section 121D as functional configurations (see Fig. 9).

The calculation unit 121C calculates the control variable for controlling the extension and retraction of the guide 50 in the up-down direction as the operation of the forklift 10 every one-billionth of a second based on the detection information acquired by the acquisition unit 121B. For example, the calculation unit 121C calculates the extension/retraction amount of the guide 50 according to the positional relationship between the forklift 10 and the delivery destination of the cargo L based on the detection information, and calculates the control variable for extending/retracting the guide 50 to the extension/retraction amount.

The control section 121D controls the extension and retraction of the guide 50 based on the control variable calculated by the calculation unit 121C.

Next, a flow of processing executed by the computer 1200 functioning as the Central Brain 24 will be described. In the computer 1200, the CPU 1212 reads the program installed on the computer 1200, loads the program in the RAM 1214, and executes the program, thereby executing processing of the flowchart illustrated in Fig. 10. Only steps S21 and S22 in which the processing contents are different from those of the fourth embodiment will be described below.

In step S21, the CPU 1212 calculates the control variable for controlling the extension and retraction of the guide 50 based on the detection information acquired in step S20. The CPU 1212 proceeds to step S22.

In step S22, the CPU 1212 controls the extension and retraction of the guide 50 based on the control variable calculated in step S21. The CPU 1212 ends the processing of the flowchart illustrated in Fig. 10.

As described above, in the computer 1200 functioning as the Central Brain 24 according to the eighth embodiment, the CPU 1212 calculates the control variable for controlling the extension and retraction of the guide 50 in the up-down direction every one-billionth of a second based on the detection information. The CPU 1212 controls the extension and retraction of the guide 50 based on the calculated control variable. As a result, in the computer 1200, the cargo L can be precisely moved to a position higher than the control device 20. In addition, in the computer 1200, when the cargo L is not placed on the pallet 40, the forklift 10 can be moved at a high speed by retracting the guide 50.

### (Ninth Embodiment)

Next, a ninth embodiment according to the present embodiment will be described while omitting or simplifying an overlapping portion with the above embodiments.

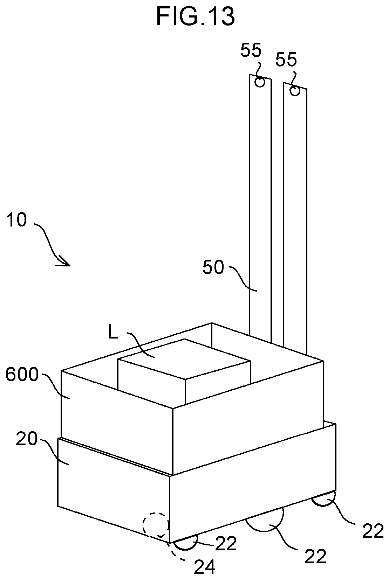

Fig. 13 is a perspective view illustrating the forklift 10 according to the ninth embodiment. Specifically, Fig. 13 illustrates a protruding body in which a protective member 600 such as a fence protrudes upward from the periphery of the control device 20. The protective member 600 protrudes in a manner that the Central Brain 24 controls driving of a drive mechanism (not illustrated). As an example, the protective member 600 is configured by combining four plate-like members.

Here, in the ninth embodiment, differing from the fourth embodiment, the CPU 1212 of the computer 1200 includes the acquisition unit 121B, the calculation unit 121C, and the control section 121D as functional configurations (see Fig. 9).

The calculation unit 121C calculates the control variable for controlling the protrusion amount of the protective member 600 as the operation of the forklift 10 every one-billionth of a second based on the detection information acquired by the acquisition unit 121B. Here, the detection information acquired by the acquisition unit 121B includes dimension information indicating the dimension of the cargo L. For example, the calculation unit 121C calculates a protrusion amount that is half or more of the height dimension of the cargo L based on the detection information, and calculates a control variable for protruding the protective member 600 by the protrusion amount.

The control section 121D controls the protrusion amount of the protective member 600 based on the control variable calculated by the calculation unit 121C.

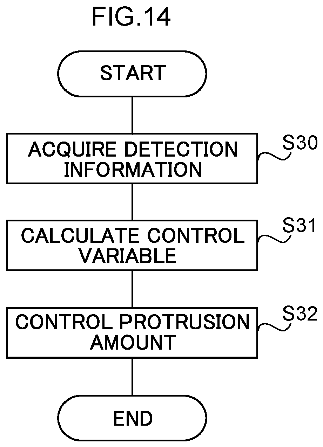

Next, a flow of processing executed by the computer 1200 functioning as the Central Brain 24 will be described. In the computer 1200, the CPU 1212 reads the program installed on the computer 1200, loads the program in the RAM 1214, and executes the program, thereby executing processing of the flowchart illustrated in Fig. 14.

In step S30, the CPU 1212 acquires detection information detected by the sensors 35 and 55, and the other sensors. The CPU 1212 proceeds to step S31.

In step S31, the CPU 1212 calculates the control variable for controlling the protrusion amount of the protective member 600 based on the detection information acquired in step S30. The CPU 1212 proceeds to step S32.

In step S32, the CPU 1212 controls the protrusion amount of the protective member 600 based on the control variable calculated in step S31. The CPU 1212 ends the processing of the flowchart illustrated in Fig. 14.

As described above, in the computer 1200 functioning as the Central Brain 24 according to the ninth embodiment, the CPU 1212 calculates the control variable for controlling the protrusion amount of the protective member 600 that can protrude upward from the periphery of the control device 20 and surround the cargo L, every one-billionth of a second based on the detection information. The CPU 1212 controls the protrusion amount of the protective member 600 based on the calculated control variable. As a result, in the computer 1200, since half or more of the height dimension of the cargo L can be surrounded by the protective member 600, the cargo L is prevented from jumping out when the forklift 10 moves at a high speed.

### (Tenth Embodiment)

Next, a tenth embodiment according to the present embodiment will be described while omitting or simplifying an overlapping portion with the above embodiments.

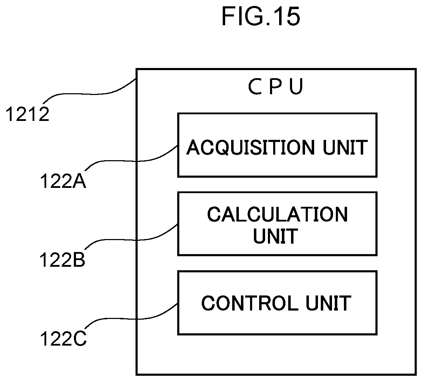

Fig. 15 is a second block diagram illustrating an example of a functional configuration of the computer 1200 that functions as the Central Brain 24.

As illustrated in Fig. 15, the CPU 1212 of the computer 1200 includes an acquisition unit 122A, a calculation unit 122B, and a control section 122C as the functional configurations. Each functional configuration is realized by the CPU 1212 reading and executing a program installed on the computer 1200.

The acquisition unit 122A acquires detection information detected by the sensors 35 and 55, and the other sensors every one-billionth of a second during movement of the forklift 10.

The calculation unit 122B calculates a control variable for controlling the operation of the forklift 10 every one-billionth of a second based on the detection information acquired by the acquisition unit 122A. In the tenth embodiment, the calculation unit 122B calculates the control variables for controlling the extension and retraction of the fork 30 in the front-rear direction and the extension and retraction of the guide 50 in the up-down direction as the operation of the forklift 10. Here, the control variable for controlling the extension and retraction of each of the fork 30 and the guide 50 is a control value for extending and retracting each of the fork 30 and the guide 50 such that the fork 30 or the guide 50 does not come into contact with another object during the movement of the forklift 10.

The control section 122C controls the extension and retraction of each of the fork 30 and the guide 50 during the movement of the forklift 10 based on the control variable calculated by the calculation unit 122B. In the tenth embodiment, the control section 122C controls the extension and retraction of each of the fork 30 and the guide 50 such that the fork 30 or the guide 50 does not come into contact with another object during the movement of the forklift 10. Specifically, the control section 122C shortens the entire length of the fork 30 when there is a possibility that the fork 30 comes into contact with another object during the movement of the forklift 10, or shortens the entire length of the guide 50 when there is a possibility that the guide 50 comes into contact with another object.

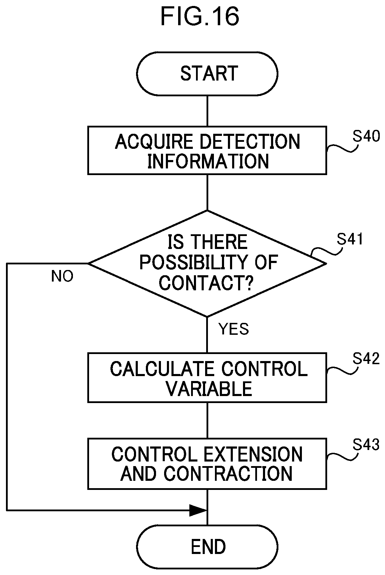

Next, a flow of processing executed by the computer 1200 functioning as the Central Brain 24 will be described. In the computer 1200, the CPU 1212 reads the program installed on the computer 1200, loads the program in the RAM 1214, and executes the program, thereby executing processing of the flowchart illustrated in Fig. 16.

In step S40, the CPU 1212 acquires detection information detected by the sensors 35 and 55, and the other sensors. The CPU 1212 proceeds to step S41.

In step S41, the CPU 1212 determines whether or not there is a possibility that the fork 30 or the guide 50 comes into contact with another object based on the detection information acquired in step S40 and the extension/retraction state of each of the fork 30 and the guide 50. Here, when the CPU 1212 determines that there is a possibility that the fork 30 or the guide 50 comes into contact with another object (step S41: YES), the process proceeds to step S42. On the other hand, when the CPU 1212 does not determine that there is a possibility that the fork 30 or the guide 50 comes into contact with another object (step S41: NO), the processing of the flowchart illustrated in Fig. 16 ends. For example, the CPU 1212 determines whether or not there is a possibility of contact between the fork 30 or the guide 50 and another object in consideration of the positional relationship between another object present on the traveling path of the forklift 10, and the fork 30 or the guide 50, the traveling route of the forklift 10, the speed of the forklift 10, and the like.

In step S42, the CPU 1212 calculates the control variable for controlling the extension and retraction of each of the fork 30 and the guide 50 based on the detection information acquired in step S40. The CPU 1212 proceeds to step S43.

In step S43, the CPU 1212 controls the extension and retraction of each of the fork 30 and the guide 50 based on the control variables calculated in step S42 such that the fork 30 or the guide 50 does not come into contact with another object during the movement of the forklift 10. The CPU 1212 ends the processing of the flowchart illustrated in Fig. 16.

As described above, in the computer 1200 functioning as the Central Brain 24 according to the tenth embodiment, the CPU 1212 calculates the control variable for controlling the operation of the forklift 10 based on the detection information detected by the sensors 35 and 55, and the other sensors. The CPU 1212 controls the extension and retraction of each of the fork 30 and the guide 50 as the operation of the forklift 10 during the movement of the forklift 10 based on the calculated control variable. Specifically, the CPU 1212 controls the extension and retraction of each of the fork 30 and the guide 50 such that the fork 30 or the guide 50 does not come into contact with another object during the movement of the forklift 10. As a result, in the computer 1200, the forklift 10 can be moved while extending and retracting the fork 30 and the guide 50 such that the fork 30 or the guide 50 does not come into contact with another object. Therefore, the forklift 10 can move in a narrow place or the like in a factory, and can contribute to a significant improvement in production capacity, factory efficiency, and the like.

In the tenth embodiment, the extension and retraction of each of the fork 30 and the guide 50 are controlled such that the fork 30 or the guide 50 does not come into contact with another object during the movement of the forklift 10, but the control example of the fork 30 and the guide 50 is not limited thereto. For example, the CPU 1212 may recognize the place of the delivery destination of the cargo L based on the detection information, and control the extension and retraction of each of the fork 30 and the guide 50 during the movement of the forklift 10 in accordance with the recognized place of the delivery destination of the cargo L. As a result, by extending and retracting the positions, heights, and the like of the fork 30 and the guide 50 in accordance with the delivery destination of the cargo L during the movement of the forklift 10, the cargo L can be delivered to the delivery destination in a short time after the forklift 10 stops.

### (Eleventh Embodiment)

Next, an eleventh embodiment according to the present embodiment will be described while omitting or simplifying an overlapping portion with the above embodiments.

In the eleventh embodiment, as an example, in the fork 30 illustrated in Figs. 8A and 8B, the Central Brain 24 controls the operation of the forklift 10 including at least one of an extension/retraction distance in the horizontal direction or a movement distance of the fork 30 in the up-down direction, specifically, based on the load (weight) of the cargo L.

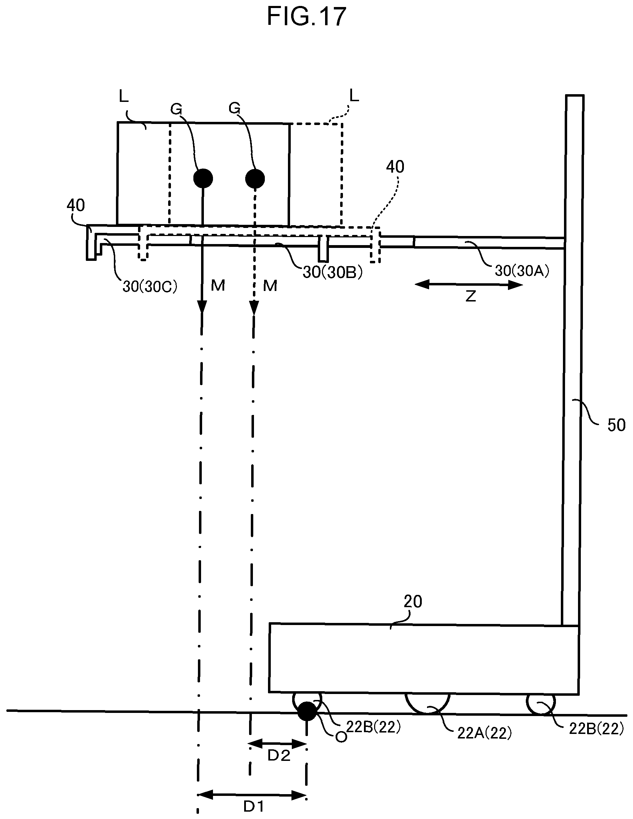

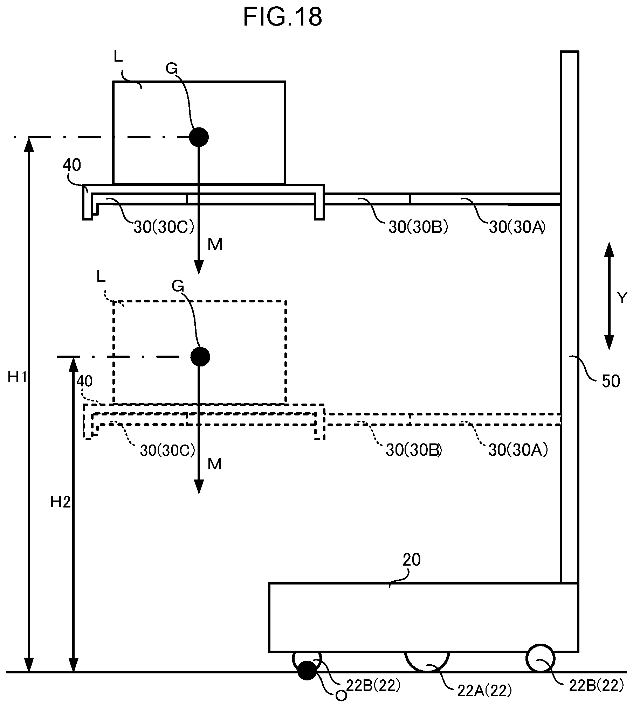

Figs. 17 and 18 are side views illustrating the forklift 10 according to the eleventh embodiment. Specifically, Fig. 17 is a side view illustrating a case where the fork 30 of the forklift 10 is extended and retracted in the horizontal direction (arrow Z direction in Fig. 17), and Fig. 18 is a side view illustrating a case where the fork 30 of the forklift 10 is moved in the up-down direction (height direction; arrow Y direction in Fig. 18).

As illustrated in Fig. 17, in the eleventh embodiment, the left and right driven wheels 22B on the front side of the forklift 10 are set as falling fulcrums O, and the center of gravity of the cargo L is set as the center of gravity G. In general, the falling moment of the forklift 10 is expressed by the distance from the falling fulcrum O × the load M of the cargo L. That is, when the load M of the cargo L is substantially the same, as an example, in a case where the fork 30 is extended and retracted so that the distance from the falling fulcrum O to the center of gravity G in the horizontal direction (Z direction) becomes a distance D1, the falling moment becomes larger than in a case where the fork is extended and retracted so that a distance D2 becomes shorter than the distance D1.

On the other hand, as illustrated in Fig. 18, when the load M of the cargo L is substantially the same, as an example, in a case where the guide 50 is moved so that the height in the up-down direction (Y direction) from the falling fulcrum O to the center of gravity G becomes the height H1, the falling moment becomes larger than in a case where the guide is moved so that the height H2 is lower than the height H1.

That is, when the load M of the cargo L is substantially the same, the falling moment increases as the cargo L moves away from the falling fulcrum O, so that the forklift 10 easily falls. In addition, when the distance from the falling fulcrum O to the center of gravity G is substantially the same, the falling moment increases as the load M of the cargo L increases, and thus the forklift 10 easily falls.

As an example, the allowable range of the falling moment is set in advance by the position of the center of gravity of the forklift 10 in a state where the cargo L is not placed on the fork 30, the load, and the like. The Central Brain 24 calculates a control variable based on the load M of the cargo L in the detection information taken in from the sensors 35 and 55, and the other sensors such that the falling moment when the cargo L is placed falls within an allowable range of the falling moment set in advance. The control variable is, for example, at least one of the distance from the falling fulcrum O to the center of gravity G of the cargo L or the height. The Central Brain 24 controls at least one of the extension/retraction distance in the horizontal direction (Z direction) or the movement distance in the up-down direction (Y direction) of the fork 30 based on the calculated control variable, that is, at least one of the distance from the falling fulcrum O to the center of gravity G of the cargo L or the height. Specifically, the Central Brain 24 moves the fork 30 such that the center of gravity G of the cargo L is located at the calculated distance and height.

As described above, by controlling at least one of the extension/retraction distance of the fork 30 in the horizontal direction (Z direction) or the movement distance of the fork in the up-down direction (Y direction) based on the load of the cargo L, the risk of the forklift 10 falling can be reduced.

### (Twelfth Embodiment)

Next, a twelfth embodiment according to the present embodiment will be described while omitting or simplifying an overlapping portion with the above embodiments.

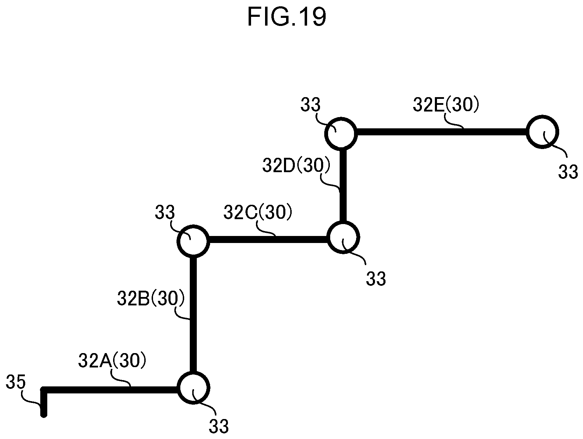

Fig. 19 is a side view illustrating the entire fork 30 according to the twelfth embodiment. Fig. 19 schematically illustrates the entire fork 30.

As illustrated in Fig. 19, the forklift 10 according to the twelfth embodiment includes a plurality of forks 30. The forks 30 can be configured as illustrated in Figs. 6, 8A, and 8B. In the twelfth embodiment, as an example, five forks 30 are provided. Specifically, a first fork 32A, a second fork 32B, a third fork 32C, a fourth fork 32D, and a fifth fork 32E are provided. In the twelfth embodiment, each of the first fork 32A to the fifth fork 32E may be referred to as a fork 30.

Each fork 30 is connected by a connection portion 33. As an example, the connection portion 33 connects the adjacent forks 30 such that the adjacent forks 30 are relatively rotatable clockwise and counterclockwise in Fig. 19 around the connection portion 33. The fork 30 in the connection portion 33 is rotated by a drive mechanism (not illustrated) as an example. The drive mechanism is controlled by the Central Brain 24. The connection portion 33 has a lock mechanism with which the fork 30 can be locked at any angle. A known technique can be used for the connection portion 33 and the lock mechanism, and a detailed description thereof will be omitted here. The connection portion 33 at the rear end portion opposite to the distal end portion of the fork 30 provided with the sensor 35 is connected to the guide 50.

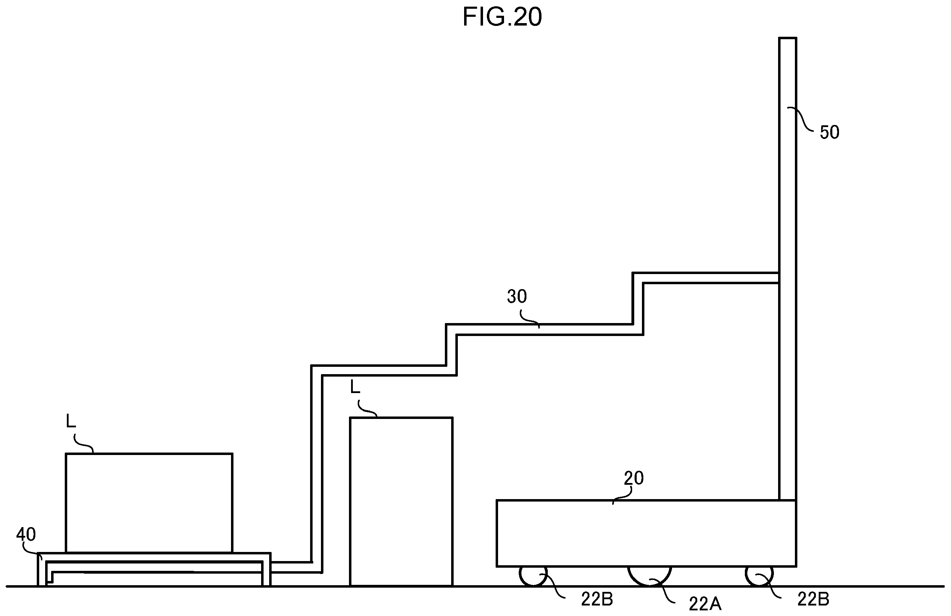

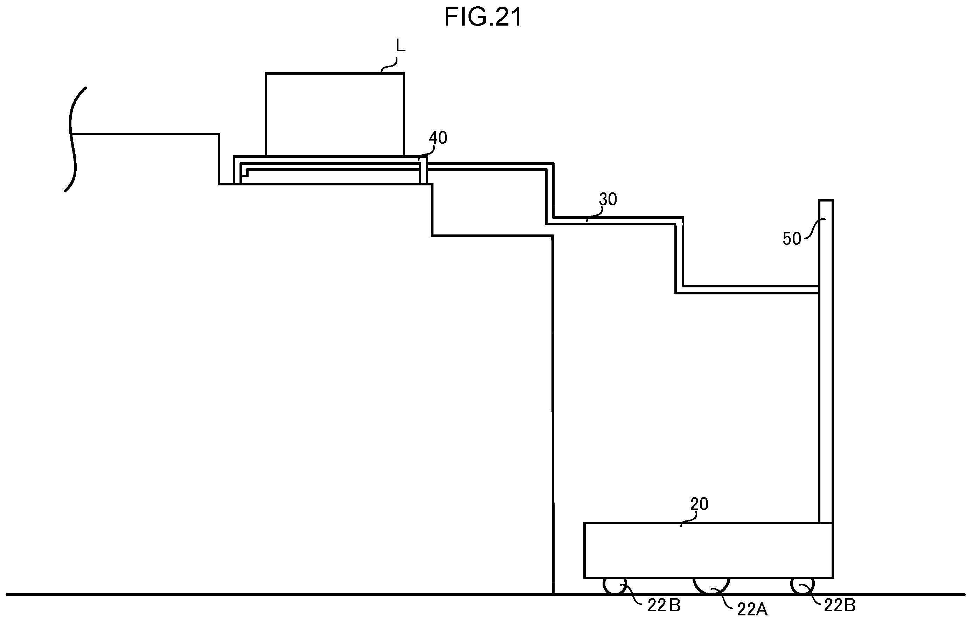

In the twelfth embodiment, in a state where the lock function is released, the five forks 30 are folded such that an angle formed at a substantially right angle between the adjacent forks 30 becomes small, so that the five forks 30 can be stored in a folded state (see Figs. 20 and 21). Further, by unfolding the folded fork 30, the fork can be deformed in a stepwise manner as illustrated in Fig. 19.

According to the above configuration, as illustrated in Fig. 20, for example, it is assumed that, as the peripheral information indicating the peripheral situation of the forklift 10 which is an example of the detection information taken in from the sensors 35 and 55, and the other sensors, it is detected that there is another cargo L in front of the pallet 40 conveyed by the forklift 10. In this case, the Central Brain 24 acquires the information regarding the outer shape of the other cargo L and the position information of the pallet 40 from the sensors 35 and 55, and the other sensors. By driving and controlling the connection portion 33 based on the acquired information, the extension/retraction amount of each fork and the rotation amount and rotation direction in the connection portion 33 are calculated as control variables.

The Central Brain 24 controls deformation of each of the forks 30 based on the calculated control variable. As a result, the pallet 40 can be placed on the fork 30 without moving another cargo L in front of the pallet 40. After the pallet 40 is placed on the fork 30, the Central Brain 24 calculates the extension/retraction amount of each of the forks 30 and the movement amount of the guide 50 in the up-down direction as control variables, and extends/retracts and moves each of the forks 30 up and down based on the calculated control variables. As a result, the pallet 40 on which the cargo L is placed can be moved to a desired position.

As illustrated in Fig. 21, for example, it is assumed that, as the peripheral information indicating the peripheral situation of the forklift 10 which is an example of the detection information taken in from the sensors 35 and 55, and the other sensors, it is detected that the pallet 40 conveyed by the forklift 10 is placed in the middle of the stairs. In this case, the Central Brain 24 acquires the information regarding the outer shape of the stair and the position information of the pallet 40 from the sensors 35 and 55, and the other sensors. By driving and controlling the connection portion 33 based on the acquired information, the extension/retraction amount of each fork and the rotation amount and rotation direction in the connection portion 33 are calculated as control variables.

The Central Brain 24 controls deformation of each of the forks 30 based on the calculated control variable. As a result, for example, even when the pallet 40 is located above the upper end of the guide 50 in the up-down direction, the pallet 40 can be placed on the fork 30. After the pallet 40 is placed on the fork 30, the Central Brain 24 calculates the extension/retraction amount of each of the forks 30 and the movement amount of the guide 50 in the up-down direction as control variables, and extends/retracts and moves each of the forks 30 up and down based on the calculated control variables. As a result, the pallet 40 on which the cargo L is placed can be moved to a desired position.

### (Thirteenth Embodiment)

Next, a thirteenth embodiment according to the present embodiment will be described while omitting or simplifying an overlapping portion with the above embodiments.

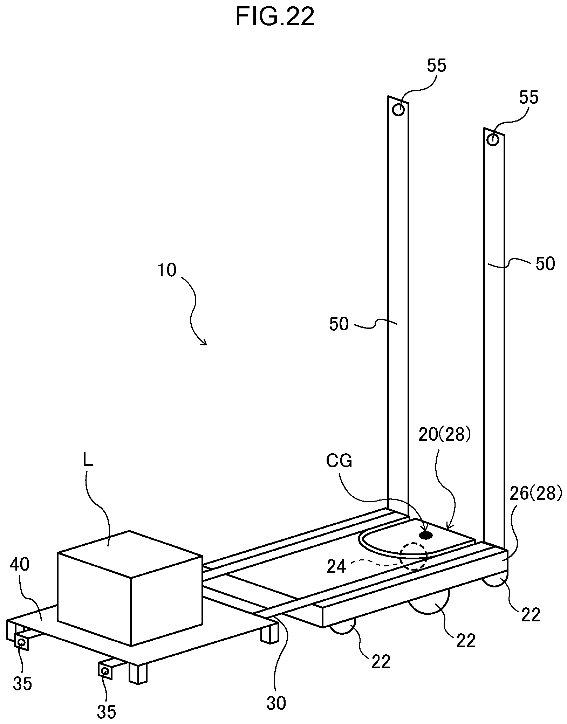

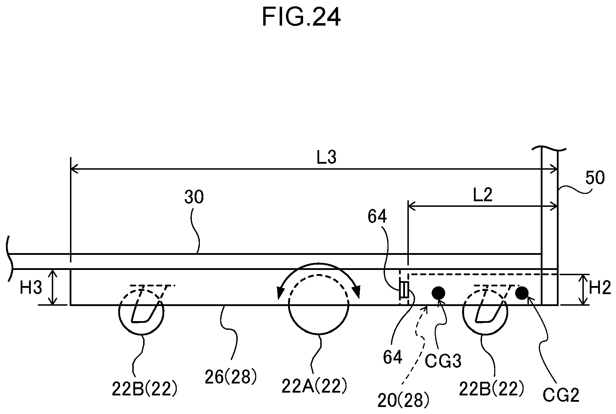

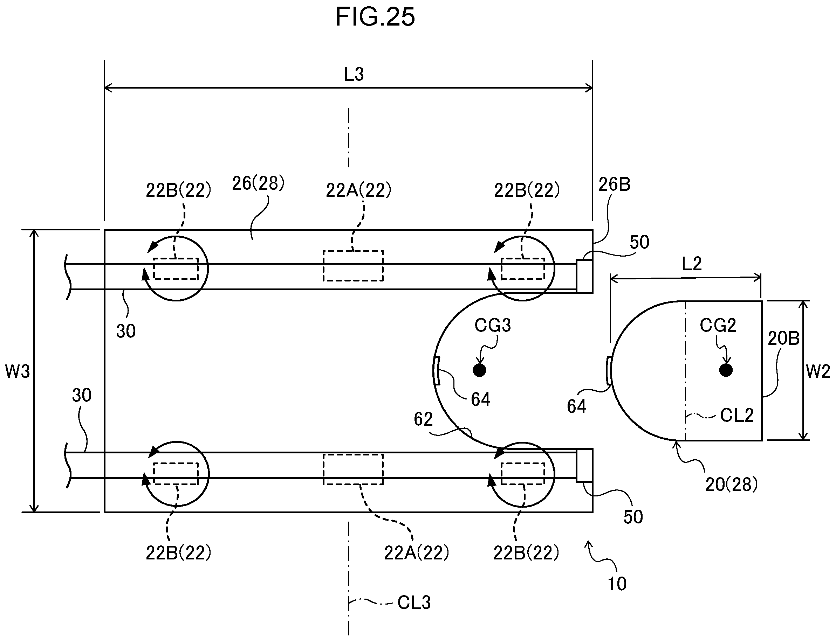

In the forklift 10 according to the thirteenth embodiment, as illustrated in Figs. 22 to 24, the control section 28 includes the housing 26 and the control device 20. Further, as illustrated in Fig. 25, the control device 20 is configured to be attachable to and detachable from the housing 26.

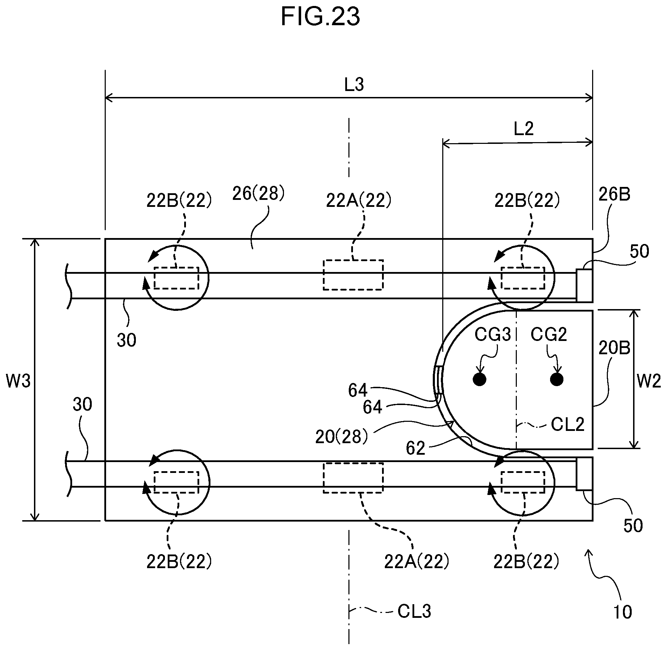

As illustrated in Figs. 23 and 25, the control device 20 includes a semicircular portion and a rectangular portion in plan view. The control device 20 has a length L2, a width W2, and a height H2 as a whole. The control device 20 has a non-line-symmetric shape with respect to a center line CL2 in the length direction.

In the thirteenth embodiment, the housing 26 has a rectangular parallelepiped shape having a length L3, a width W3, and a height H3. Also in the thirteenth embodiment, the housing 26 is flat in the height direction, that is, the up-down direction.

A mounting portion 62 to which the control device 20 is mounted is formed in the housing 26. The mounting portion 62 of the housing 26 has a semicircular portion and a rectangular portion corresponding to the shape of the control device 20. The mounting portion 62 is opened to the side opposite to the direction in which the fork 30 extends. The control device 20 enters into the mounting portion 62 at a posture in which the semicircular portion of the control device 20 is directed in the same direction as the direction in which the fork 30 extends. When the control device 20 enters to a predetermined position of the mounting portion 62, the rear surface 26B of the housing 26 and the rear surface 20B of the control device 20 are aligned in a straight line in plan view, and the housing 26 and the control device 20 form an integral rectangular shape.

The housing 26 and the control device 20 are provided with a contact portion 64. In a state where the control device 20 is mounted at a predetermined position of the mounting portion 62, the housing 26 and the control device 20 are electrically contacted by the contact portion 64.

The center of gravity CG2 of the control device 20 is located on the rear side of the center line CL2 in the length direction of the control device 20, that is, on the opposite side to the direction in which the fork 30 extends (the direction of the arrow E1) in a state where the control device 20 is mounted at the predetermined position of the mounting portion 62.

The center of gravity CG3 of the housing 26 is located on the rear side of the center line CL3 in the length direction, that is, on the side opposite to the direction in which the fork 30 extends (direction of the arrow E1). The center of gravity CG3 referred to herein is in a state where the control device 20 is not mounted on the mounting portion 62, that is, a single center of gravity of the housing 26.

In the forklift 10 according to the thirteenth embodiment having such a configuration, the control device 20 is attachable to and detachable from the housing 26. As illustrated in Fig. 25, the control device 20 can be inserted into the mounting portion 62 from a state where the control device 20 is separated from the housing 26, and can be mounted on the housing 26 as illustrated in Figs. 22 to 24.

In a state where the control device 20 is mounted on the housing 26, the center of gravity CG2 of the control device 20 is located on the opposite side of the center line CL2 from the direction in which the fork 30 extends (the direction of the arrow E1). Thus, for example, even in a state where the fork 30 is in an extending state and the cargo L is placed on the fork 30, it is possible to suppress the forklift 10 from falling down toward an extension direction side of the fork 30. Even in a state where the fork 30 is moved to the upper portion of the guide 50 and the fork 30 is further extended (see Fig. 6 illustrated as the first embodiment), it is possible to suppress the forklift 10 from falling down toward the extension direction side of the fork 30.

In the thirteenth embodiment, the center of gravity CG3 of the housing 26 is also located on the opposite side of the center line CL3 from the direction in which the fork 30 extends (the direction of the arrow E1). Thus, for example, even in a state where the fork 30 is in an extending state and the cargo L is placed on the fork 30, it is possible to suppress the forklift 10 from falling down toward an extension direction side of the fork 30.

Here, for example, as illustrated in Fig. 25, it is assumed that the control device 20 is separated from the housing 26. Also in this case, the center of gravity CG3 of the housing 26 is located on the opposite side of the center line CL3 from the direction in which the fork 30 extends (the direction of the arrow E1). Therefore, for example, in a state where the fork 30 is in an extending state and the cargo L is placed on the fork 30, it is possible to suppress the forklift 10 from falling down toward an extension direction side of the fork 30.

In the thirteenth embodiment, the control device 20 has a non-line-symmetric shape with respect to the center line CL2. Thus, when the control device 20 is mounted on the housing 26, it is easy to specify a mounting direction. In addition, in the thirteenth embodiment, as an example of the non-line-symmetric shape of the control device 20, a semicircular portion and a rectangular portion are provided. As a result, it is possible to realize a structure in which the center of gravity CG2 of the control device 20 is easily set at a position shifted from the center line CL2.

Also in the thirteenth embodiment, the housing 26 is flat in the up-down direction, and the center of gravity CG3 of the housing 26 is on the lower side. Therefore, the posture of the forklift 10 is stabilized. For example, even when the forklift 10 travels with the cargo L placed on the fork 30, the posture of the forklift 10 is stabilized.

### (Fourteenth Embodiment)

Next, a fourteenth embodiment according to the present embodiment will be described while omitting or simplifying an overlapping portion with the above embodiments.

**In** the fourteenth embodiment, a movable screen type guard 60A is provided at the pallet 40 provided in the forklift 10. Differences from the first embodiment will be described below. The same components are denoted by the same reference signs, and a detailed description thereof will be omitted.

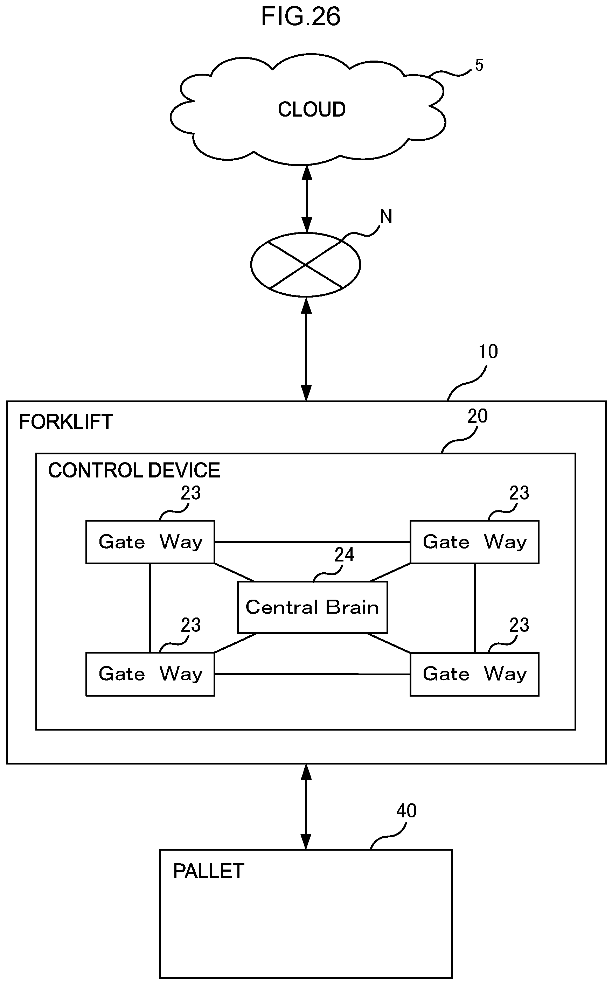

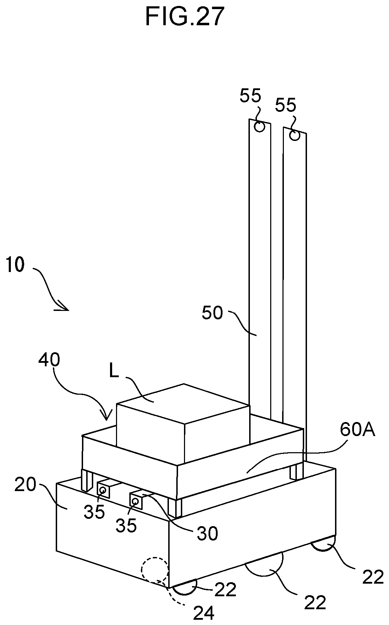

As illustrated in Fig. 26, the control device 20 in the fourteenth embodiment is configured to be connectable to the pallet 40 having the guard 60A (see Fig. 27) by communication.

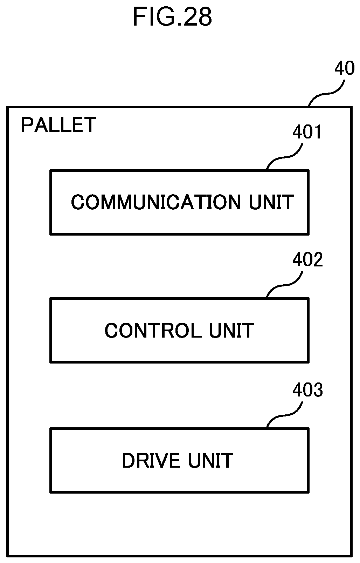

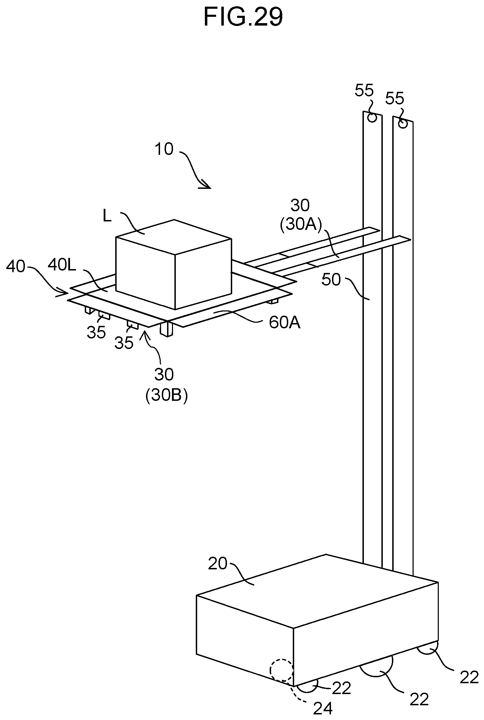

The pallet 40 in the fourteenth embodiment includes a loading surface 40L on which a cargo L is loaded and the guard 60A which is a movable screen provided on each side of the loading surface 40L (see Figs. 27 and 29). As illustrated in Fig. 28, the pallet 40 further includes a communication unit 401 that communicates with the control device 20, a drive unit 403 that drives the guard 60A, and a control section 402 that controls the communication unit 401 and the drive unit 403.

As illustrated in Fig. 27, the guard 60A in the fourteenth embodiment is a plate-shaped member provided on four sides of the rectangular pallet 40. The height of the guard 60A is not limited to the ratio in Fig. 27 and can be set as necessary. The width of the guard 60A is not limited to the case where the guard is provided over the entire area of each side of the pallet 40, and a plurality of the guards may be provided on a part of each side or each side. The number of guards 60A is not limited to four.

**In** addition, the guard 60A in the fourteenth embodiment can fall to open outward as illustrated in Fig. 29. As a result, the cargo L can be easily taken out of the pallet 40. As described above, the guard 60A is in a rising state like a screen or a movable type that falls to open outward.

Such movement of the guard 60A is controlled by the Central Brain 24 of the control device 20 to be interlocked with a traveling state of the forklift 10. The Central Brain 24 controls the guard 60A based on information obtained by detecting the acceleration during traveling of the forklift 10. The detection information including the acceleration during traveling of the forklift 10 can be detected based on the sensor 35.

Specifically, the Central Brain 24 of the control device 20 receives the acceleration of the forklift 10, and the Central Brain 24 transmits detection information of the acceleration to the pallet 40. The communication unit 401 of the pallet 40 receives detection information from the Central Brain 24 of the control device 20. When the received detection information indicates an increase in acceleration, the drive unit 403 of the pallet 40 raises the guard 60A. When the received detection information indicates a decrease in acceleration, the drive unit 403 of the pallet 40 lowers the guard 60A.

When the communication unit 401 receives the detection information regarding the acceleration equal to or greater than a set value as a criterion for determination of increase/decrease in acceleration by the control section 402 of the pallet 40, the control section 402 controls the drive unit 403 to raise the guard 60A. When the communication unit 401 receives the detection information regarding the acceleration less than the set value, the control section 402 controls the drive unit 403 to lower the guard 60A. As described above, the control section 402 determines the increase or decrease in the acceleration based on a threshold value that can be set in advance, and the guard 60A is moved by the drive unit 403.

The control section 402 of the pallet 40 may perform control to raise the guard 60A when the placement of the cargo L on the pallet 40 is detected by weight regardless of the acceleration of the forklift 10.

In addition, the Central Brain 24 of the control device 20 can also control to raise only the guard 60A in the direction opposite to the acceleration of the forklift 10.

The direction opposite to the acceleration of the forklift 10 is, that is, the direction of the acceleration applied to the cargo L, and if only the guard 60A in the direction of the acceleration applied to the cargo L is raised, even though the cargo moves when the forklift accelerates, the guard 60A can prevent falling or the like.

Specifically, the Central Brain 24 of the control device 20 receives the detection information of the increase in acceleration of the forklift 10 (including information of on the direction of the acceleration), and the communication unit 401 of the pallet 40 receives the detection information from the Central Brain 24 of the control device 20. Based on the received information, the drive unit 403 of the pallet 40 raises the guard 60A located in the direction opposite to the direction of the acceleration. That is, when the forklift 10 according to the fourteenth embodiment accelerates, the guard 60A on the rear side of the pallet 40 rises, and when the forklift 10 decelerates, the guard 60A on the front side of the pallet 40 rises. In addition, when the forklift 10 according to the fourteenth embodiment turns rightward, the guard 60A on the left side of the pallet 40 rises, and when the forklift 10 turns leftward, the guard 60A on the right side of the pallet 40 rises.

The Central Brain 24 of the control device 20 receives the detection information of the decrease in acceleration of the forklift 10 (including information of on the direction of the acceleration), and the communication unit 401 of the pallet 40 receives the detection information from the Central Brain 24 of the control device 20. Based on the received information, the drive unit 403 of the pallet 40 lowers the guard 60A located in the direction opposite to the direction of the acceleration.

As described above, the Central Brain 24 of the control device 20 controls the rising of only the guard 60A in the direction opposite to the acceleration of the forklift 10, whereby the use of guards 60A can be suppressed to the minimum, and the facility cost of the forklift 10 can be reduced.

Lowering the guard 60A includes not only indicating of falling to open to the outside but also operating to be stored on the back side of the pallet 40 as illustrated in Fig. 29.

As described above, the guard 60A in the fourteenth embodiment rises like a screen at the position of the side of the pallet 40 of the forklift 10 on which the cargo L is placed, so that there are effects of preventing the cargo from falling, scattering, and falling.

### (Fifteenth Embodiment)

Next, a fifteenth embodiment according to the present embodiment will be described while omitting or simplifying an overlapping portion with the above embodiments.

**In** the fifteenth embodiment, forks 30 are provided at a plurality of positions in the height direction of the guide 50 provided in the forklift 10. Differences from the first embodiment will be described below. The same components are denoted by the same reference signs, and a detailed description thereof will be omitted.

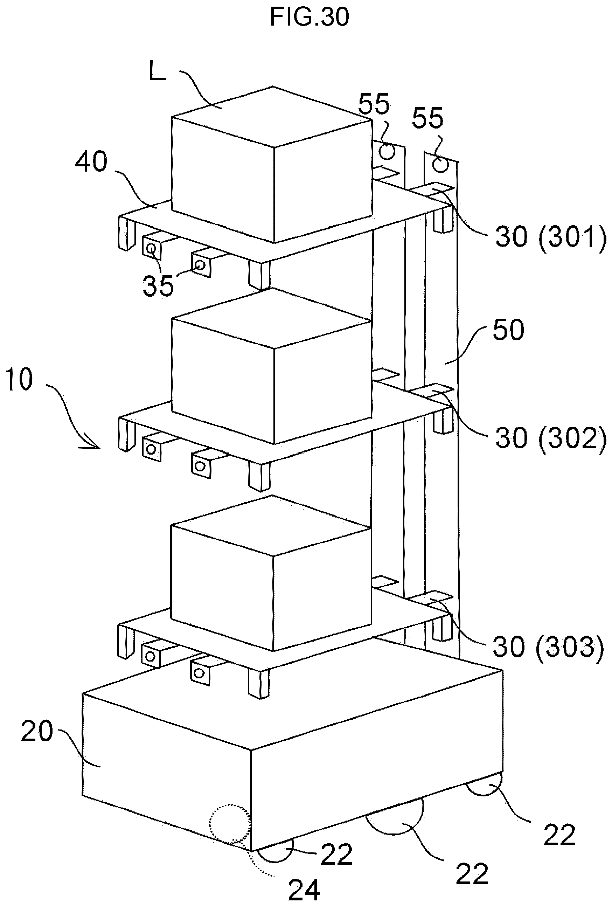

The guide 50 of the fifteenth embodiment includes forks 30 at a plurality of positions in the height direction. Specifically, as illustrated in Fig. 30, the fork 30 includes a fork 301, a fork 302, and a fork 303.

The fork 301 is disposed in an upper area of the guide 50, the fork 302 is disposed in a middle area of the guide 50, and the fork 303 is disposed in a lower area of the guide 50. Each area may be evenly distributed in the height direction of the guide 50, and adjacent areas may overlap. For example, in the case of being evenly distributed, the height from the lower end to 1/3 of the guide 50 can be set as the lower area, the height from 1/3 to 2/3 can be set as the middle area, and the height from 2/3 to the upper end can be set as the upper area. For example, when the areas overlap, the height from the lower end to 3/7 of the guide 50 can be set as the lower area, the height from 2/7 to 5/7 can be set as the middle area, and the height from 4/7 to the upper end can be set as the upper area. The location and range of each area where each fork 30 is installed are not limited to the above example, and the fork 30 can be disposed in accordance with a necessary portion. The number of forks 30 is not limited to three.

In the fifteenth embodiment, the extension and retraction of each fork 30 can be interlocked by the plurality of forks 30. Specifically, the extension and the like of the plurality of forks 30 are controlled by the control section (for example, Central Brain 24) of the control device 20. For example, a case where a cargo L placed on the pallet 40 on a shelf having three upper, middle, and lower stairs is loaded on the forklift 10 in the fifteenth embodiment will be exemplified. First, the control section of the control device 20 extends the fork 303 in the lower area of the guide 50, and places the lower pallet 40 on the extended fork 303. Then, while the fork 303 is retracted, the control section extends the fork 302 in the middle area of the guide 50 and places the pallet 40 on the extended fork 302. Further, while the fork 302 is retracted, the control section extends the fork 301 in the upper area of the guide 50, and places the upper pallet 40 on the extended fork 301.

As described above, by interlocking the extension and retraction of the plurality of forks 30, it is possible to reduce unnecessary movement and waiting time when loading a plurality of cargos L on the forklift 10, and to perform efficient distribution.

In the fifteenth embodiment, the order of loading the plurality of cargos L onto the forks 30 when the forklift 10 loads the plurality of cargos L is not limited. However, in consideration of the balance of the forklift 10, the control section of the control device 20 may perform control such that the cargo L is placed on the fork 303, the fork 302, and the fork 301 in this order, and the cargo L is lowered on the fork 301, the fork 302, and the fork 303 in this order.

In addition, when the forklift 10 loads the cargo L, the camera as the sensor 35 provided at the distal end of each fork 30 may read the label of the cargo L on the shelf, the control section may acquire information regarding the type, the weight, and the like of the cargo L, and at least one of the placement order or the unloading order of the cargo L with respect to each fork 30 may be determined based on the acquired information. For example, in consideration of the balance of the forklift 10 as described above, the control section determines to place the cargo L in the order of the fork 303, the fork 302, and the fork 301 from the heavy cargo L, and determines to lower the cargo L in the order of the fork 301, the fork 302, and the fork 303 from the light cargo L.

If the weight of the cargo L scheduled to be placed on the fork 301 is light, the control section may perform control to place the light cargo L on the fork 301 before placing the cargo L on the fork 302 and the fork 303. In addition, if the weight of the cargo L placed on the fork 302 is the largest, the control section may perform control to lower the cargo L of the fork 302 before unloading the cargo L of the fork 301 and the fork 303.

Furthermore, the control section of the control device 20 may move each fork 30 to interlock with the traveling state of the forklift 10. Specifically, the control section of the control device 20 controls the extension and retraction of each fork 30 based on the acceleration with respect to the forklift 10.

For example, it is assumed that, in the stopped state of the forklift 10, each fork 30 extends and retracts such that the center of gravity of the placed cargo L coincides with the center of gravity of the control device 20 as much as possible (that is, the longitudinal position of the center of gravity of each cargo L in plan view is close to the center of gravity of the control device 20). **In** this case, when the forklift 10 starts traveling and the acceleration changes, the control section controls each of the forks 30. That is, the control section extends the fork 30 when the forklift 10 is accelerated, and retracts the fork 30 when the forklift is decelerated. As a result, the balance of the forklift 10 during traveling is controlled, and the falling of the forklift 10 can be suppressed.

When the balance is controlled by extension and retraction of the forks 30 as described above, only the specific forks 30 may be extended and retracted without extending and retracting all the forks 30. For example, only the fork 301 that is farthest from the tire 22 (that is, at the highest position) and has the largest influence on the balance of the forklift 10 may be extended and retracted.

When the balance is controlled, the control section of the control device 20 may extend and retract the fork 30 when the speed exceeds a speed set in advance or when the acceleration exceeds an acceleration set in advance.

The control section acquires the acceleration by analysis based on captured images of the camera as the sensor 35 and the sensor 55, information of an acceleration sensor mounted as another sensor, and calculation obtained by differentiating the speed. Furthermore, the control section acquires the speed by analysis based on captured images of the camera as the sensor 35 and the sensor 55, calculation based on the rotation speed of the tire 22, and calculation obtained by integrating acceleration.

As described above, the forklift 10 according to the fifteenth embodiment can efficiently transport the plurality of cargos L by disposing the plurality of forks 30 on the guide 50 and the control device 20 controlling the plurality of forks 30. Furthermore, according to the fifteenth embodiment, it is possible to provide various cargo loading methods and transport forms as compared with the conventional forklift including the operation unit.

### (Sixteenth Embodiment)

Next, a sixteenth embodiment according to the present embodiment will be described while omitting or simplifying an overlapping portion with the above embodiments.

**In** the sixteenth embodiment, the forks 30 are provided not only on the front surface but also on the rear surface of the guide 50 provided in the forklift 10. Differences from the first and fifteenth embodiments will be described below. The same components are denoted by the same reference signs, and a detailed description thereof will be omitted.

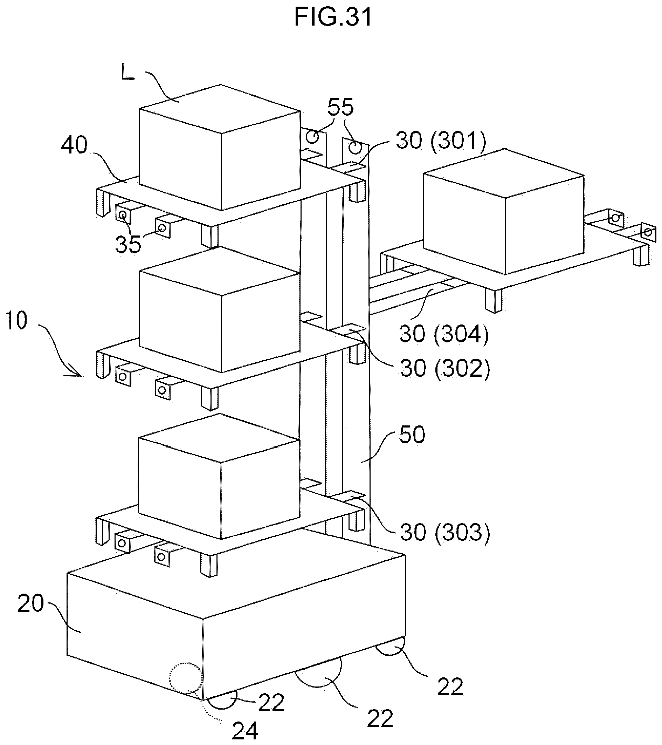

As illustrated in Fig. 31, the guide 50 in the sixteenth embodiment includes a fork 304 on the rear surface of the guide 50. The installation position of the fork 304 in the height direction is not limited to the location in Fig. 31, and the fork can be disposed at a flexible height as necessary. The number of forks 304 is not limited to one. For example, as in the fifteenth embodiment, three forks 30 may also be installed on the rear surface of the guide 50.

The control of the extension and retraction of each of the forks 30 is performed by the control section of the control device 20 similarly to the fifteenth embodiment. That is, the control section can control the extension and retraction of the fork 30 according to the loading order of the cargo L and the balance of the forklift 10 using the extension and retraction of the fork 30.

As described above, in the forklift 10 in the sixteenth embodiment, the forks 30 are disposed also on the rear surface of the guide 50, so that it is possible to efficiently transport a plurality of cargos in different directions in addition to the effects of the fifteenth embodiment.

### (Seventeenth Embodiment)

Next, a seventeenth embodiment according to the present embodiment will be described while omitting or simplifying an overlapping portion with the above embodiments.

In the seventeenth embodiment, a plurality of pairs of forks 30 capable of rotating in the right-left direction are provided. The up and down movement of the fork 30 and the rotation of the fork 30 in the right-left direction are performed in a manner that the Central Brain 24 controls the drive of the drive mechanism. Differences from the first embodiment will be described below. The same components are denoted by the same reference signs, and a detailed description thereof will be omitted.

### (Configuration)

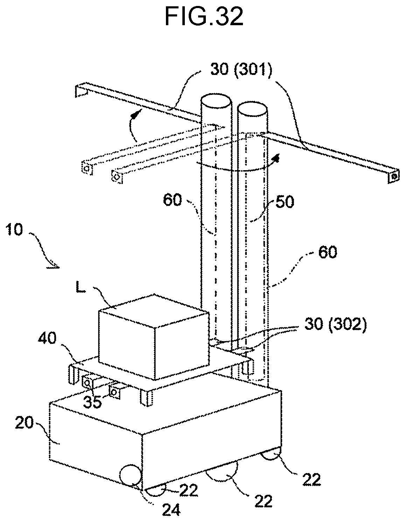

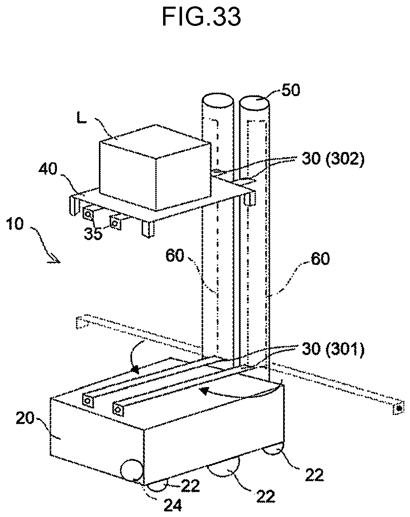

Figs. 32 and 33 are perspective views illustrating an example of the control of the forklift 10 according to the seventeenth embodiment. As illustrated in Figs. 32 and 33, the fork 30 having no load is rotatable in the right-left direction with respect to the guide 50. The load in the seventeenth embodiment is the pallet 40 on which a cargo L is placed.

The guide 50 in the seventeenth embodiment includes a plurality of pairs of forks 30. The plurality of pairs of forks 30 in the seventeenth embodiment are a pair of forks 301 and a pair of forks 302. Each pair of forks moves up and down and rotates left and right in conjunction with each other. In addition, the fork 30 moves along a guideway 60 described later. The number of pairs of forks 30 is not limited to two, and may be three or more.

The guideway 60 includes two vertical tracks extending in the up-down direction along the extension direction of the guide 50. The guideway 60 in the seventeenth embodiment has horizontal tracks at the upper end and the lower end of the vertical track to enable the fork 30 to rotate in the right-left direction. The position where the horizontal track is provided is not limited to the upper end and the lower end of the vertical track, and may be any position on the vertical track. In addition, three or more horizontal tracks may be provided.

The fork 301 illustrated in Fig. 32 illustrates a state where the distal end of the fork 301 moved to the upper end of the extended track is directed toward the front of the forklift 10, and then is rotated outward by 90 degrees. The fork 302 illustrated in Fig. 32 illustrates a state where the pallet 40 on which the cargo L is placed is placed.

The fork 301 illustrated in Fig. 33 illustrates a state where the distal end of the fork 301 moved from the upper end to the lower end of the vertical track is rotated outward by 90 degrees, and then is rotated inward by 90 degrees, and is directed forward again. The fork 302 illustrated in Fig. 33 illustrates that the fork 302 ascends the vertical track in a state where the pallet 40 on which the cargo L is placed is placed.

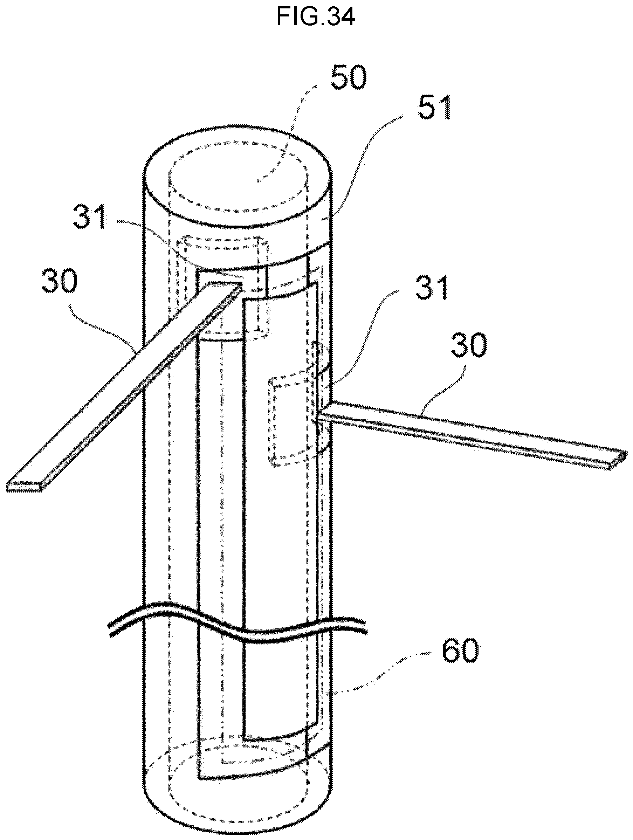

Fig. 34 is a perspective view schematically illustrating a structure of the fork 30 and the guide 50 of the forklift 10 according to the seventeenth embodiment. As illustrated in Fig. 34, the fork 30 includes a support portion 31 and the guide 50 includes a cover 51.

The fork 30 is formed to protrude from the support portion 31. The support portion 31 is sandwiched between the guide 50 and the cover 51 so that the support portion 31 can move up and down and rotate rightward and leftward. The fork 30 and the support portion 31 move along the guideway 60. The support portion 31 and the fork 30 may be integrally formed, or the fork 30 may be detachable from the support portion 31.

The guide 50 in the seventeenth embodiment has a substantially cylindrical shape. In addition, the cover 51 is provided with a gap through which the support portion 31 can move with respect to the guide 50, and is formed outside the guide 50. The guide 50 is provided with the guideway 60 through which the fork 30 passes. The guideway 60 is formed as a groove that communicates from the front surface to the back surface of the cover 51, and forms a circulation track for the forks 30 to move. The guideway 60 may be referred to as a "circulation track 60" below.

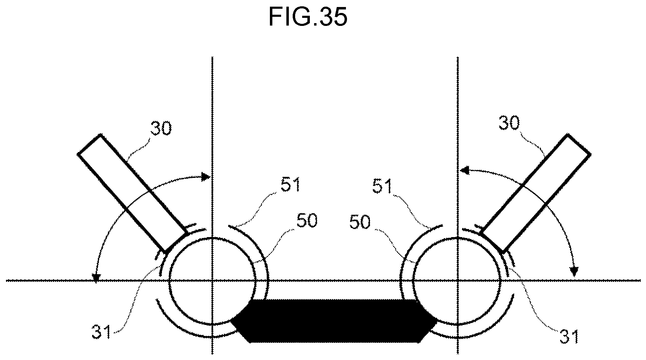

Fig. 35 is a view schematically illustrating a movable range in which the fork 30 according to the seventeenth embodiment rotates in the right-left direction. As illustrated in Fig. 35, the fork 30 rotates along the guideway 60 provided at the cover 51 together with the support portion 31.

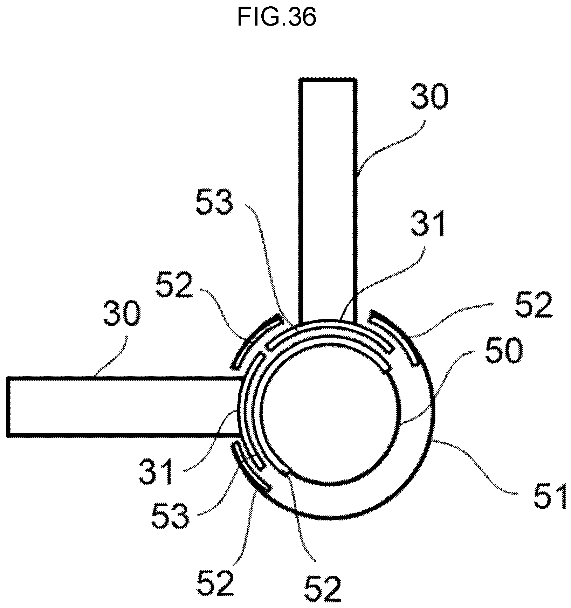

Fig. 36 is a view schematically illustrating a drive mechanism of the fork 30 according to the seventeenth embodiment. The guide 50 and the support portion 31 have a linear motor mechanism as a drive mechanism of the fork 30. Specifically, the linear motor mechanism includes a stator plate 52 provided in the guide 50 and the cover 51, and a rotor plate 53 provided in the support portion 31.

The stator plate 52 is provided on the outer peripheral portion of the guide 50 and the inner peripheral portion of the cover 51. The stator plate 52 includes, for example, a plurality of first coils alternately arranged along the vertical track and a plurality of second coils alternately arranged along the horizontal track.

The rotor plate 53 provided in the support portion 31 is provided on the surface facing the stator plate 52. The rotor plate 53 is, for example, a magnet plate in which N poles and S poles of a plurality of permanent magnets are alternately arranged.

### (Function)

The control section (for example, Central Brain 24) of the control device 20 has a function of controlling the linear motor mechanism. The control section has a function of controlling not only the up-down movement of the fork 30 but also the rotation in the right-left direction by controlling the linear motor mechanism. The control section also controls the forks 30 to move along the guideway 60.

### (Operation)

Here, for example, in the forklift 10 according to the seventeenth embodiment, control in a case where the pallet 40 on which the plurality of cargos L disposed at the lower portion are placed is repeatedly moved upward will be described with reference to Figs. 32 and 33.

First, as illustrated in Fig. 32, when the pallet 40 on which the cargo L is placed is placed on the fork 302, the fork 302 ascends to transport the cargo L. Here, the control section ascends the fork 302 by controlling the current of the first coil of the stator plate 52 provided in the guide 50.

The fork 301 on which the pallet 40 on which the cargo L is placed is not placed after the transport is finished ascends along the circulation track 60. When the fork 301 reaches the upper end of the vertical track, the fork 301 rotates 90 degrees outward in the right-left direction. Here, the control section rotates the fork 301 by controlling the current of the second coil of the stator plate 52 provided in the guide 50. Thereafter, the fork 301 descends along the circulation track 60.

Then, as illustrated in Fig. 33, when the fork 301 on which the pallet 40 on which the cargo L is placed is not placed reaches the lower end of the vertical track, the fork 301 rotates inward by 90 degrees and is prepared so that the pallet 40 on which another cargo L is placed can be placed.

When the pallet 40 on which another cargo L is placed is placed on the fork 301 and the fork 302 finishes transport of the cargo L, a state similar to that in Fig. 32 is obtained. That is, the state of Fig. 32 and the state of Fig. 33 are repeated.

The example of such control is an example of a case where the pallet 40 on which a plurality of cargos L disposed at the lower portion are placed is repeatedly moved to the upper portion, but is not limited thereto. This control is also applied to a case of repeatedly moving the pallet 40 on which the plurality of cargos L disposed in the upper portion are placed to the lower portion. In this case, the direction in which the fork 30 circulates in the circulation track 60 is opposite to the above example.

### (Summary of Seventeenth Embodiment)

As described above, when the control section of the control device 20 in the seventeenth embodiment performs control, the fork 30 on which the load is placed and the fork 30 on which the load is not placed are controlled to move along other vertical tracks. Therefore, the fork 30 on which the load is placed can quickly transport the cargo L without being disturbed by the fork 30 on which the load is not placed.

In addition, the pair of forks 30 moving along one direction rotates at the upper end and the lower end of the vertical track and move along the other vertical track in the opposite direction opposite to the one direction, whereby the fork 30 for transporting the next cargo L is quickly prepared. That is, the cargo L to be transported next can be quickly placed on the fork 30. Furthermore, the forklift 10 can sequentially transport a plurality of cargos L by moving the plurality of pairs of forks 30 along the circulation track 60.

When the drive mechanism of the fork 30 is a linear motor, backlash is not required for the drive mechanism, and a lost motion can be reduced. Therefore, the control section of the control device 20 in the seventeenth embodiment can accurately control the fork 30. That is, it is possible to reduce the time required for alignment of the fork 30, which occurs when the cargo L is placed on the fork 30, when the cargo L is unloaded, and the like. In addition, switching in the opposite direction, such as the up-down movement and rightward-leftward rotation of the fork 30, can be easily performed by electric control. Furthermore, since no mechanical power transmission component is required when the fork 30 moves, noise generation and loss due to wear can be reduced.

### [Modification Example of Seventeenth Embodiment]

In the seventeenth embodiment, the movable range in which the fork 30 rotates in the right-left direction is set to 90 degrees, but the maximum rotation angle of the fork 30 is not limited thereto. Therefore, in a modification example, the movable range of the fork 30 is extended inward by extending the horizontal track of the guideway 60.

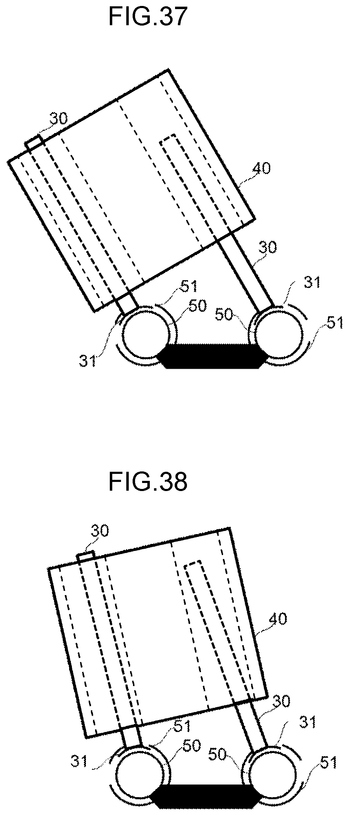

Figs. 37 to 39 are views schematically illustrating a case where the pallet 40 is placed on the fork 30 according to the modification example of the seventeenth embodiment. In the modification example, first, a pair of forks 30 rotates in the right-left direction to match the direction of an insertion port of the pallet 40. The fork 30 is extended, thereby inserting the fork 30 into the insertion port of the pallet 40. As a result, as illustrated in Fig. 37, the pallet 40 is placed on the fork 30.

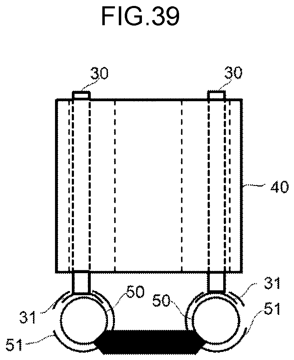

Then, after the pallet 40 is placed, the fork 30 rotates to be directed toward the front of the forklift 10. Here, as illustrated in Fig. 38, the control device 20 controls the rotation of each fork 30 in the right-left direction. As a result, as illustrated in Fig. 39, the pallet 40 is placed on the pair of forks 30 in a well-balanced manner.

As described above, the control section of the control device 20 in the modification example of the seventeenth embodiment controls the rotation of the fork 30 based on the calculated control variable. As a result, the movable range of the fork 30 extends not only to a range in which the fork 30 can extend and retract back and forth and a range in which the fork can move up and down but also to a range in which the fork can rotate in the right-left direction. Therefore, under a predetermined condition, the pallet 40 that does not face the forklift 10 can be placed on the pair of forks 30 without changing the direction of the forklift 10 itself. The predetermined condition is, for example, that the direction of the insertion port of the pallet 40 faces the direction obtained by the pair of forks 30 rotating in the right-left direction.

The control section of the control device 20 in the modification example of the seventeenth embodiment controls the up-down movement and the right-left rotation of the fork 30 moving along the guideway 60 for each of one or a plurality of forks 30. As a result, even when the plurality of forks 30 are simultaneously moved, it is possible to prevent the collision between the forks 30 based on the detection information detected by the detection unit. In addition, when the load is placed after the fork 30 rotates in the right-left direction, it is possible to redispose the load in a well-balanced manner by controlling the up-down movement and the right-left rotation of each of the forks 30.

### [Notes]

In the seventeenth embodiment, the support portion 31, the guide 50, and the cover 51 are provided with the linear motor mechanism, but the fork 30 itself may be provided with the linear motor mechanism, and the linear motor may be used for extending the fork 30 illustrated in Figs. 8A and 8B. The linear motor mechanism is not limited to a combination of a permanent magnet and an electromagnet, and may be a combination selected from a permanent magnet, an electromagnet, and a magnetic body in which at least one of the permanent magnet or the electromagnet is an electromagnet.

The blocks in the flowcharts and block diagrams in the embodiments may represent stages of a process in which an operation is performed or "units" of a device that are responsible for performing the operation. Specific stages and "units" may be implemented by dedicated circuits, programmable circuits provided with computer-readable instructions stored on a computer-readable storage medium, and/or a processor provided with computer-readable instructions stored on a computer-readable storage medium. Dedicated circuits may include digital and/or analog hardware circuits, and may include integrated circuits (ICs) and/or discrete circuits. The programmable circuit may include reconfigurable hardware circuits including, for example, logical products, disjunction, exclusive disjunction, NAND, NOR, and other logical operations, flip-flops, registers, and memory elements, such as field programmable gate arrays (FPGA) and programmable logic arrays (PLA).

The computer-readable storage medium may include any tangible device capable of storing instructions for execution by a suitable device, such that a computer-readable storage medium having instructions stored thereon includes an article of manufacture including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of a general purpose computer, special purpose computer, or other programmable data processing apparatus, or programmable circuits, either locally or over a wide area network (WAN), such as a local area network (LAN), the Internet, or the like, to cause the processor or a programmable circuit of the general purpose computer, special purpose computer, or other programmable data processing apparatus to execute the computer-readable instructions to generate means for the processor or programmable circuitry to perform the operations specified in the flowcharts or block diagrams. Examples of the processor include a computer processor, a processing unit, a microprocessor, a digital signal processor, a control section, a microcontrol section, and the like.

Although the disclosure has been described with reference to the embodiments, the technical scope of the disclosure is not limited to the scope described in the embodiments. It is apparent to those skilled in the art that various changes or improvements can be made to the embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "first", "next", and the like for convenience, it does not mean that it is essential to perform in this order.

The disclosure of Japanese Patent Application No. 2022-171807 filed on October 26, 2022, the disclosure of Japanese Patent Application No. 2022-175752 filed on November 1, 2022, the disclosure of Japanese Patent Application No. 2022-178314 filed on November 7, 2022, the disclosure of Japanese Patent Application No. 2022-194990 filed on December 6, 2022, the disclosure of Japanese Patent Application No. 2022-195223 filed on December 6, 2022, the disclosure of Japanese Patent Application No. 2022-195224 filed on December 6, 2022, the disclosure of Japanese Patent Application No. 2022-195939 filed on December 7, 2022, the disclosure of Japanese Patent Application No. 2022-199788 filed on December 14, 2022, the disclosure of Japanese Patent Application No. 2023 026751 filed on February 22, 2023, the disclosure of Japanese Patent Application No. 2023 061761 filed on April 5, 2023, and the disclosure of Japanese Patent Application No. 2023 091230 filed on June 1, 2023 are incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. An information processing apparatus comprising:
a calculation unit that calculates a control variable for controlling an operation of a forklift based on detection information detected by a detection unit mounted on the forklift; and
a control section that controls the operation of the forklift based on the control variable calculated by the calculation unit.

2. The information processing apparatus according to claim 1, wherein
the control section controls the operation of the forklift in units of one-billionth of a second based on the control variable calculated by the calculation unit.

3. The information processing apparatus according to claim 1, further comprising:
a determination unit that determines control information to be used for calculation of the control variable for each operation of the forklift from the acquirable detection information,
wherein the calculation unit calculates the control variable for the control section to control the operation of the forklift based on the control information determined by the determination unit.

4. The information processing apparatus according to claim 1, wherein
the calculation unit calculates the control variable for controlling extension and retraction of a fork that is provided in the forklift and is extendable and retractable in a front-rear direction, as the operation of the forklift based on the detection information, and
the control section controls extension and retraction of the fork based on the control variable calculated by the calculation unit.

5. The information processing apparatus according to claim 4, wherein
in the fork configured by overlapping a plurality of forks, the detection unit is mounted on each of the plurality of forks, and
the calculation unit calculates the control variable based on the detection information in which a plurality of the detection units have detected a common range.

6. The information processing apparatus according to claim 4, wherein
in the fork configured by overlapping a plurality of forks, the detection unit is mounted on each of the plurality of forks, and
the calculation unit calculates the control variable based on the detection information in which a plurality of the detection units have detected different ranges.

7. The information processing apparatus according to claim 4, wherein
the calculation unit calculates the control variable for controlling extension and retraction of a first fork as the fork or a second fork different from the first fork in the forklift based on the detection information, and
the control section controls extension and retraction of the first fork or the second fork based on the control variable calculated by the calculation unit.

8. The information processing apparatus according to claim 1, wherein
the calculation unit calculates the control variable for controlling extension and retraction of a guide that is provided in the forklift and is extendable and retractable in an up-down direction, as the operation of the forklift based on the detection information, and
the control section controls extension and retraction of the guide based on the control variable calculated by the calculation unit.

9. The information processing apparatus according to claim 1, wherein
the calculation unit calculates, as the operation of the forklift, the control variable for controlling a protrusion amount of a protective member that is able to protrude upward and surround a cargo based on the detection information, and
the control section controls the protrusion amount of the protective member based on the control variable calculated by the calculation unit.

10. The information processing apparatus according to claim 1, wherein
the control section controls, as the operation of the forklift, extension and retraction of at least one of a fork that is provided in the forklift and is extendable and retractable in a front-rear direction or a guide that is provided in the forklift and is extendable and retractable in an up-down direction, during movement of the forklift based on the control variable calculated by the calculation unit.

11. The information processing apparatus according to claim 10, wherein
the control section controls extension and retraction of at least one of the fork or the guide such that the fork or the guide does not come into contact with another object during the movement of the forklift.

12. The information processing apparatus according to claim 1, wherein
the calculation unit calculates the control variable for controlling the operation of the forklift, the control variable including at least one of an extension/retraction distance in a horizontal direction or a movement distance in an up-down direction of a fork of the forklift, based on detection information that is detected by the detection unit and includes a weight of a cargo placed on the fork, and
the control section controls the operation of the forklift including at least one of the extension/retraction distance in the horizontal direction or the movement distance in the up-down direction of the fork, based on the control variable calculated by the calculation unit.

13. The information processing apparatus according to claim 1, wherein
the calculation unit calculates the control variable for controlling the operation of the forklift including deformation of a plurality of forks, based on the detection information detected by the detection unit mounted on the forklift including the plurality of forks each of which deforms stepwise, and
the control section controls the operation of the forklift including deformation of the plurality of forks based on the control variable calculated by the calculation unit.

14. The information processing apparatus according to claim 13, wherein
the detection information includes peripheral information indicating a peripheral situation of the forklift,
the calculation unit calculates the control variable for controlling the deformation of the plurality of forks based on the peripheral information, and
the control section controls the operation of the forklift based on the control variable for controlling the deformation of the plurality of forks.

15. The information processing apparatus according to claim 1, wherein
a center of gravity of the control section is located on a side opposite to a direction in which a fork of the forklift extends.

16. The information processing apparatus according to claim 15, wherein
the control section includes
a housing provided with the fork, and
a control device provided in the housing.

17. The information processing apparatus according to claim 16, wherein
the housing is flat in an up-down direction.

18. The information processing apparatus according to claim 17, wherein
the control device is attachable to and detachable from the housing.

19. The information processing apparatus according to claim 18, wherein
the control device has a non-line-symmetric shape in plan view.

20. The information processing apparatus according to claim 18, wherein
a center of gravity of the control device is located on a side opposite to the direction in which the fork extends in a state where the control device is attached to the housing.

21. The information processing apparatus according to claim 18, wherein
a center of gravity of the housing is located on a side opposite to the direction in which the fork extends.

22. The information processing apparatus according to claim 1, wherein
the control section controls a height of a guard provided on at least one of four sides of a platform on which a cargo is placed in the forklift.

23. The information processing apparatus according to claim 22, wherein
the control section raises the guard in accordance with an increase in acceleration during traveling of the forklift.

24. The information processing apparatus according to claim 23, wherein
the control section lowers the guard in accordance with a decrease in the acceleration during the traveling of the forklift.

25. The information processing apparatus according to claim 23, wherein
the control section raises the guard in a direction opposite to the acceleration of the forklift.

26. The information processing apparatus according to claim 1, wherein
the calculation unit calculates the control variable for controlling the operation of the forklift including rotation of a fork that is rotatable in a right-left direction with respect to a guide that extends in an up-down direction, based on the detection information detected by the detection unit mounted on the forklift including the guide and the fork, and
the control section controls the operation of the forklift including the rotation of the fork based on the control variable calculated by the calculation unit.

27. The information processing apparatus according to claim 26, wherein
the control section
controls an up-down movement and a right-left rotation of the fork that moves along a predetermined circulation track along the guide, the predetermined circulation track including a vertical track extending in an up-down direction,
for each of one or a plurality of the forks.

28. The information processing apparatus according to claim 27, wherein
the control section
moves a pair of the forks on which a load is placed, along the vertical track, and
performs control to move another pair of the forks on which the load is not placed, along another vertical track different from the vertical track in the circulation track in a state where the other pair of the forks is rotated to a predetermined angle in a right-left direction.

29. The information processing apparatus according to claim 28, wherein
in a case where the pair of forks moved along one direction of the vertical track reaches an end portion of the vertical track, the control section performs control to rotate the forks to a predetermined angle in the right-left direction and to move the other vertical track along an opposite direction opposite to the one direction.

30. The information processing apparatus according to claim 26, wherein
a drive mechanism of the fork is a linear motor.

31. A program for causing a computer to function as the information processing apparatus according to any one of claims 1 to 30.

32. A forklift comprising:
a guide that extends in an up-down direction;
a plurality of forks that are movable in the up-down direction for each area of a height of the guide and are capable of extending and retracting a part on which a cargo is placed, in a front-rear direction with respect to the guide;
a detection unit mounted on the forklift; and
a control section that controls vertical movement and extension/retraction of the plurality of forks based on the information detected by the detection unit.

33. The forklift according to claim 32, wherein
one or a plurality of the forks are provided on each of a front surface and a rear surface of the guide.

34. The forklift according to claim 32 or 33, wherein
the detection unit detects information regarding a weight of each of the cargos placed on each of the forks, and
the control section controls the plurality of forks based on at least one of a placement order or an unloading order of the cargos with respect to the plurality of forks determined in accordance with the weight of each of the cargos.

35. The forklift according to claim 32 or 33, wherein
the control section performs autonomous traveling based on information detected by the detection unit.

36. The forklift according to claim 35, wherein
the control section controls each of the forks based on a gravity center position of the forklift.
